# EUROPEAN PATENT SPECIFICATION

(11) **EP 2 788 118 B1**
(45) Date of publication and mention of the grant of the patent: **14.11.2018**
(21) Application number: 12819008.9
(22) Date of filing: 03.12.2012
(51) Int. Cl.: B01J 23/42, B01J 23/46, B01J 35/00, B01J 35/04, B01D 53/04, F01N 3/08, F01N 11/00, F02D 41/30, F01N 3/20, B01J 37/02

(54) **EXHAUST GAS CLEANING CATALYST APPARATUS WITH CONTROL UNIT, EXHAUST GAS CLEANING METHOD USING SAID APPARATUS**
GESTEUERTE VORRICHTUNG ZUR ABGASREINIGUNG UND DAMIT AUSGEFÜHRTES ABGASREINIGUNGSVERFAHREN
DISPOSITIF DE PURIFICATION DE GAZ D'ÉCHAPPEMENT AVEC UNITÉ DE CONRÔLE ET MÉTHODE POUR PURIFIER LES GAZ D'ÉCHAPPEMENT AVEC LEDIT DISPOSITIF

(30) Priority: 08.12.2011 JP 2011269354
(43) Date of publication of application: 15.10.2014
(73) Proprietor: TOYOTA JIDOSHA KABUSHIKI KAISHA, Toyota-shi, Aichi-ken, 471-8571 (JP)
(72) Inventor: TAKAGI, Nobuyuki, Aichi-ken, 471-8571 (JP); SATAKE, Yasushi, Aichi-ken, 448-8671 (JP)
(74) Representative: Kuhnen & Wacker Patent- und Rechtsanwaltsbüro PartG mbB
(86) International application number: PCT/IB2012/002566
(87) International publication number: WO 2013/084041

(56) References cited:
- EP-A1- 2 047 903
- EP-A1- 2 402 571
- EP-A1- 2 402 572
- WO-A1-2006/028028
- WO-A1-2008/067375
- WO-A2-2012/167253
- US-A1- 2004 082 470
- US-A1- 2009 165 444
- US-A1- 2010 058 741

## Description

### BACKGROUND OF THE INVENTION

### 1. Field of the Invention

The present invention relates to an exhaust gas cleaning method which uses an exhaust gas cleaning catalyst to clean exhaust gas from an internal combustion engine, and an exhaust gas control apparatus including an exhaust gas cleaning catalyst.

### 2. Description of Related Art

In diesel engines, an NOx storage catalyst has been put to practical use as an exhaust gas cleaning catalyst which is used to remove (convert) nitrogen oxides (NOx) in exhaust gas. The NOx storage catalyst is produced by providing a metal catalyst, such as platinum (Pt) and rhodium (Rh), and an NOx absorbent which contains an alkaline metal or alkaline-earth metal on the surfaces of a substrate.

When the air-fuel ratio is in a lean (oxygen-excess) state, the NOx in exhaust gas is oxidized on the platinum catalyst and then absorbed by the NOx absorbent. When the air-fuel ratio is switched to a stoichiometric state (stoichiometric air-fuel ratio state) or rich state (rich spike control), the NOx which has been absorbed by the NOx absorbent is released, and reduced (converted) on the rhodium catalyst by components such as hydrocarbon (HC) and carbon monoxide (CO). The rich spike control is executed by, for example, intermittently supplying hydrocarbon to the NOx storage catalyst to temporarily increase the hydrocarbon concentration in the exhaust gas. In addition, there is a limit of the amount of NOx that can be stored in the NOx absorbent (i.e., there is a saturation amount). Thus, in an NOx conversion treatment using an NOx storage catalyst, rich spike control is usually repeated in a pulse manner before the amount of NOx stored in the NOx absorbent reaches the saturation amount so that the NOx in the exhaust gas can be continuously converted.

However, NOx conversion efficiency decreases when the temperature of the NOx storage catalyst increases (for example, to 300°C or higher). In other words, when the temperature of the NOx storage catalyst becomes high, the amount of NOx that can be stored in the NOx storage absorbent (saturation amount) decreases sharply, and the NOx absorbent cannot absorb NOx any more even if the air-fuel ratio is in a lean state. Thus, when the temperature is high, the NOx in the exhaust gas may pass through the NOx storage catalyst to the downstream side, resulting in a decrease in the NOx conversion efficiency. To solve the problem, attempts are made to optimize the conversion performance of an NOx storage catalyst by switching between two different cleaning modes depending on the catalyst temperature. Related art which uses such two different NOx conversion methods is disclosed in International Patent Publication No. 2011/114501.

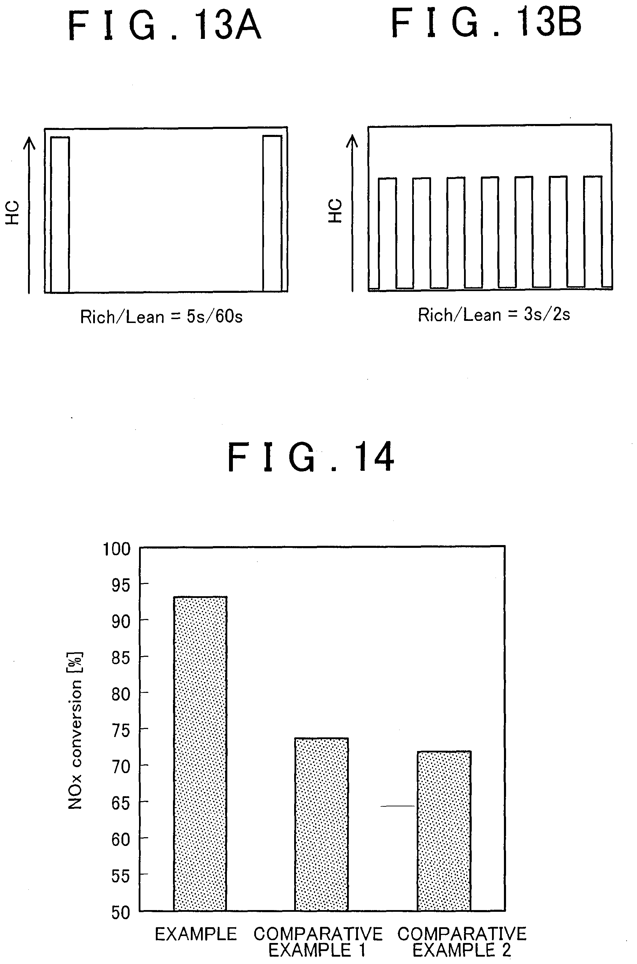

In an exhaust gas control apparatus which uses two different cleaning modes as described above, a treatment to convert NOx in exhaust gas is performed by reducing the intervals at which hydrocarbon (HC) is supplied and the amount of supplied hydrocarbon (HC) so that the air-fuel ratio is alternately switched between a lean state and a stoichiometric or rich state in a short cycle (for example, one cycle is five seconds or shorter), as shown in FIG. 13B (high-temperature cleaning mode) when the catalyst temperature is in a high temperature range (e.g., 300°C or higher), for example. In the high temperature range in which the rate of reaction increases, higher NOx conversion performance can be achieved when the conversion treatment is performed by quickly switching the gas atmosphere in a short cycle regardless of the NOx storage capacity, because the NOx storage capacity is significantly lower than that in a low temperature range. On the other hand, when the catalyst temperature is in a low temperature range (e.g., lower than 300°C), a treatment to convert NOx in exhaust gas is performed by increasing the intervals at which hydrocarbon (HC) is supplied and the amount of supplied hydrocarbon (HC) so that the air-fuel ratio is maintained at a lean state for a long period (60 seconds or longer, for example) and is temporarily shifted to a stoichiometric or rich state as shown in FIG. 13A (low-temperature cleaning mode). In the low temperature range in which the rate of reaction is low, a higher NOx conversion efficiency can be achieved by performing the conversion treatment in which the air fuel ratio is maintained at a lean state for a long period so that a high NOx storage capacity at a low temperature can be fully utilized, rather than by performing the cleaning treatment in which the gas atmosphere is quickly switched as in the high-temperature cleaning mode as described above.

The performance of the exhaust gas control apparatus which uses the two different cleaning modes as described above is required to be further improved. The present inventors conducted various studies on the exhaust gas control apparatus which uses the two different cleaning modes described above, and, consequently, found that the conversion performance in each of the two cleaning modes cannot be fully utilized when a conventional NOx storage catalyst in which noble metals (platinum and rhodium) are distributed uniformly over the entire portion thereof is used.

In the low-temperature cleaning mode in which the air-fuel ratio is maintained in a lean state for a long period (60 seconds or longer, for example) and is temporarily switched to a stoichiometric or rich state, the NOx conversion reaction occurs in the entire NOx storage catalyst because one cycle is long and a large amount of HC is supplied at one time. In addition, because the NOx which has been absorbed in the NOx absorbent is released at once when the air-fuel ratio is shifted to a stoichiometric or rich state, the released NOx needs to be quickly reduced (converted) on the rhodium (Rh). Thus, in the low-temperature cleaning mode, an NOx storage catalyst which contains a high proportion of rhodium, which has high reducing performance, is required. On the other hand, in the high-temperature cleaning mode in which the air-fuel ratio is alternately switched between a lean state and a stoichiometric or rich state in a short cycle (one cycle is five seconds or shorter, for example), an NOx conversion reaction zone is limited to an upstream portion of the catalyst including an exhaust gas inlet side end thereof (the upstream half of the catalyst, for example) because one cycle is short and a small amount of HC is supplied at one time. In addition, the catalyst performance that is required in the high-temperature cleaning mode is different from the catalyst performance that is required in the low-temperature cleaning mode. Because it is necessary to switch the air-fuel ratio to a stoichiometric or rich state within a short period (in order to burn the hydrocarbon quickly on the platinum (Pt)), an NOx storage catalyst which contains a high proportion of platinum, which has high oxidation performance, is required.

Thus, in the exhaust gas control apparatus which uses the two cleaning modes as described above, the conversion performance in each of the two modes cannot be fully utilized even when the Pt/Rh mass ratio in the entire catalyst is simply controlled, because when the Pt/Rh mass ratio is adjusted to be advantageous for one of the cleaning modes, the conversion performance in the other cleaning mode cannot be fully utilized.

### SUMMARY OF THE INVENTION

The inventors of the present invention conducted intensive studies on the exhaust gas control apparatus which uses the low-temperature cleaning mode and the high-temperature cleaning mode as described above, and found that a catalyst with a high mass proportion of Rh, which has high reducing performance, is advantageous in the low-temperature cleaning mode and a catalyst with a high mass proportion of Pt, which has high oxidization performance, is advantageous in the high-temperature cleaning mode. In addition, the inventors of the present invention found that the NOx conversion reaction occurs uniformly in the entire catalyst in the low-temperature cleaning mode, whereas an NOx conversion reaction zone where the NOx conversion reaction occurs is limited to an upstream portion of the catalyst including the exhaust gas inlet side end thereof (the upstream half of the catalyst, for example) in the high-temperature cleaning mode. Thus, the inventors of the present invention further conducted testing and studies with an idea that the conversion performance in each of the two modes can be utilized more effectively when the Pt/Rh mass ratio (the mass ratio of Pt to Rh) in the upstream portion of the exhaust gas cleaning catalyst is different from the Pt/Rh mass ratio in the downstream portion of the exhaust gas cleaning catalyst, and, consequently, made the present invention. In particular, the objects are achieved by a method according to claim 1, and an apparatus according to claim 5. Preferred embodiments are subject of dependent claims.

An exhaust gas cleaning catalyst is provided in an exhaust passage of an internal combustion engine to convert NOx in exhaust gas. The exhaust gas cleaning catalyst includes a carrier; a plurality of kinds of metal catalysts which are supported on the carrier; and an NOx absorbent which is supported on the carrier and has an NOx storage capacity. The exhaust gas cleaning catalyst includes at least platinum (Pt) and rhodium (Rh) as the metal catalysts. A Pt/Rh mass ratio (Pt/Rh) in an upstream portion of the exhaust gas cleaning catalyst including an exhaust gas inlet side end of the exhaust gas cleaning catalyst is different from the Pt/Rh mass ratio in a downstream portion of the exhaust gas cleaning catalyst including an exhaust gas outlet side end of the exhaust gas cleaning catalyst, and the Pt/Rh mass ratio in the upstream portion is higher than the Pt/Rh mass ratio in the downstream portion. The Pt/Rh mass ratio is a mass ratio of platinum (Pt) to rhodium (Rh) in the exhaust gas cleaning catalyst.

In the exhaust gas cleaning catalyst the upstream portion is configured to have a higher Pt/Rh mass ratio than the downstream portion so that the upstream portion has a characteristic advantageous for the high-temperature cleaning mode in which only the upstream portion of the exhaust gas cleaning catalyst is used. Thus, the NOx conversion performance in the high-temperature cleaning mode can be further improved. In addition, the downstream portion of the exhaust gas cleaning catalyst is configured to have a lower Pt/Rh mass ratio than the upstream portion so that the downstream portion has a characteristic advantageous for the low-temperature cleaning mode in which the entire catalyst is used. Thus, the conversion activity can be maintained at a suitable level in the low-temperature cleaning mode. Therefore, when the above exhaust gas cleaning catalyst is used, it is possible to significantly improve the NOx conversion performance of the exhaust gas control apparatus in which the two cleaning modes as described above are used.

The upstream portion may have a length equal to 25% to 60% of a length of the exhaust gas cleaning catalyst (preferably 25% to 50%, in other words, 1/4 (one-fourth) to 1/2 (half) of the entire length of a substrate), and may extend from the exhaust gas inlet side end (upstream end) toward an exhaust gas outlet (a downstream side) of the exhaust gas cleaning catalyst. The downstream portion is the part other than the upstream portion. Because the upstream portion has a length equal to 25% to 60% of the length of the exhaust gas cleaning catalyst, and extends from the exhaust gas inlet side end toward the exhaust gas outlet of the exhaust gas cleaning catalyst, the conversion activity is effectively maintained in the low-temperature cleaning mode and the conversion performance is effectively improved in the high-temperature cleaning mode.

The Pt/Rh mass ratio in the upstream portion may be equal to or higher than 9 (e.g., equal to or higher than 9 and equal to or lower than 25, preferably equal to or higher than 15 and equal to or lower than 25). When the Pt/Rh mass ratio in the upstream portion is equal to or higher than 9, the air-fuel ratio can be switched to a stoichiometric or rich state at once within a short period in the high-temperature cleaning mode. Thus, the improvement of the NOx conversion performance in the high-temperature cleaning mode can be achieved more effectively.

The Pt/Rh mass ratio in the downstream portion may be lower than 9 (e.g., equal to or higher than 1 and lower than 9, preferably equal to or higher than 2 and equal to or lower than 6). When the Pt/Rh mass ratio in the downstream portion is lower than 9, the NOx which is released at once from the NOx absorbent can be quickly reduced in the low-temperature cleaning mode. Thus, the maintenance of the NOx conversion activity in the low-temperature cleaning mode can be achieved more effectively.

The NOx absorbent is made of a metal oxide which contains at least one of an alkaline metal and an alkaline-earth metal.
A metal oxide that contains at least one of an alkaline metal and an alkaline-earth metal has high NOx storage capacity and is therefore suitable as an NOx absorbent for use in the exhaust gas cleaning catalyst that is disclosed herein.

A first aspect of the present invention relates to an exhaust gas cleaning method for converting NOx in exhaust gas from an internal combustion engine using an exhaust gas cleaning catalyst that is provided in an exhaust passage of the internal combustion engine. In the exhaust gas cleaning method, the exhaust gas cleaning catalyst according to the above-described aspect is used as the exhaust gas cleaning catalyst. The exhaust gas cleaning method includes a high-temperature cleaning mode in which a treatment to convert NOx in exhaust gas is performed by alternately varying a concentration of hydrocarbon that flows into the exhaust gas cleaning catalyst between a high-concentration range in which the concentration of hydrocarbon is relatively high (and in which the air-fuel ratio is typically richer or slightly leaner than the stoichiometric air-fuel ratio) and a low-concentration range in which the concentration of hydrocarbon is relatively low (and in which the air-fuel ratio is typically by far leaner than the stoichiometric air-fuel ratio) in a predetermined cycle when a temperature of the exhaust gas cleaning catalyst (the term "the temperature of the exhaust gas cleaning catalyst" includes the temperature of exhaust gas flowing into the exhaust gas cleaning catalyst. This applies to the following description.) is equal to or higher than a prescribed reference value; and a low-temperature cleaning mode in which a treatment to convert NOx in exhaust gas is performed by maintaining the concentration of hydrocarbon that flows into the exhaust gas cleaning catalyst in the low-concentration range and temporarily shifting the concentration of hydrocarbon from the low-concentration range to the high-concentration range at intervals each of which is longer than the predetermined cycle when the temperature of the exhaust gas cleaning catalyst is lower than the prescribed reference value.

According to the exhaust gas cleaning method configured as described above, because the cleaning mode is appropriately switched between the low-temperature cleaning mode and the high-temperature cleaning mode depending on the temperature of
the exhaust gas cleaning catalyst, the NOx conversion performance can be significantly improved. In addition, because the exhaust gas cleaning catalyst, in which the upstream portion has a higher Pt/Rh ratio than the downstream portion, is used, the conversion activity in the low-temperature cleaning mode can be maintained at a suitable level and the conversion performance in the high-temperature cleaning mode can be improved.

In the above-described aspect, in the low-temperature cleaning mode, the concentration of hydrocarbon that flows into the exhaust gas cleaning catalyst is maintained in the low-concentration range for a maintaining period of 60 seconds to 100 seconds and then shifted to the high-concentration range for a period equal to at most 10% of the maintaining period. A high NOx conversion efficiency can be achieved in the low-temperature cleaning mode by setting the cycle in which the hydrocarbon concentration is varied, as described above.

In the above-described aspect, in the high-temperature cleaning mode, the concentration of hydrocarbon that flows into the exhaust gas cleaning catalyst is alternately varied between the high-concentration range and the low-concentration range in a cycle of 0.3 seconds to 5 seconds. A high NOx conversion efficiency can be achieved in the high-temperature cleaning mode by setting the cycle in which the hydrocarbon concentration is varied, as described above.

In the above-described aspect, the reference value for the temperature of the exhaust gas cleaning catalyst is a value that is set in a range of 280°C to 500°C. The NOx storage capacity of the exhaust gas cleaning catalyst may decrease sharply when the temperature is 280°C or higher. Thus, when the reference value for the temperature of the exhaust gas cleaning catalyst is set in the above value range, high NOx conversion performance of the exhaust gas cleaning catalyst can be achieved even at a high temperature of 280°C or higher.

A second aspect of the present invention relates to an exhaust gas control apparatus which converts NOx in exhaust gas from an internal combustion engine using an exhaust gas cleaning catalyst. The exhaust gas control apparatus includes the exhaust gas cleaning catalyst according to above-described aspect which is provided in an exhaust passage of the internal combustion engine; a temperature sensor which measures a temperature of the exhaust gas cleaning catalyst; and a control portion which is electrically connected to the temperature sensor. The control portion is configured to measure the temperature of the exhaust gas cleaning catalyst using the temperature sensor, and to execute a high-temperature cleaning mode in which a treatment to convert NOx in exhaust gas is performed by alternately varying a concentration of hydrocarbon that flows into the exhaust gas cleaning catalyst between a high-concentration range in which the concentration of hydrocarbon is relatively high (and in which the air-fuel ratio is typically richer or slightly leaner than the stoichiometric air-fuel ratio) and a low-concentration range in which the concentration of hydrocarbon is relatively low (and in which the air-fuel ratio is typically by far leaner than the stoichiometric air-fuel ratio) in a predetermined cycle when the measured temperature of the exhaust gas cleaning catalyst is equal to or higher than a prescribed reference value, and a low-temperature cleaning mode in which a treatment to convert NOx in exhaust gas is performed by maintaining the concentration of hydrocarbon that flows into the exhaust gas cleaning catalyst in the low-concentration range and temporarily shifting the concentration of hydrocarbon from the low-concentration range to the high-concentration range at intervals each of which is longer than the predetermined cycle when the measured temperature of the exhaust gas cleaning catalyst is lower than the prescribed reference value.

The exhaust gas control apparatus according to the above-described aspect may further include hydrocarbon supply means which is located upstream of the exhaust gas cleaning catalyst in the exhaust passage and supplies hydrocarbon. The control portion may be configured to activate the hydrocarbon supply means to supply hydrocarbon into the exhaust passage at predetermined supply intervals in the high-temperature cleaning mode. The reference value for the temperature of the exhaust gas cleaning catalyst is a value that is set in a range of 280°C to 500°C. The control portion is configured to maintain the concentration of hydrocarbon that flows into the exhaust gas cleaning catalyst in the low-concentration range for a maintaining period of 60 seconds to 100 seconds and then shift the concentration of hydrocarbon to the high-concentration range for a period equal to at most 10% of the maintaining period in the low-temperature cleaning mode. The control portion is configured to alternately vary the concentration of hydrocarbon that flows into the exhaust gas cleaning catalyst between the high-concentration range and the low-concentration range in a cycle of 0.3 seconds to 5 seconds in the high-temperature cleaning mode.

The exhaust gas control apparatus with the above configuration can implement the above exhaust gas cleaning method appropriately. In other words, in the exhaust gas control apparatus with the above configuration, because the cleaning mode is appropriately switched between the low-temperature cleaning mode and the high-temperature cleaning mode depending on the temperature of the exhaust gas cleaning catalyst, the NOx conversion performance can be significantly improved. In addition, because the exhaust gas cleaning catalyst, in which the upstream portion has a higher Pt/Rh ratio than the downstream portion, is provided in the exhaust passage, the conversion activity in the low-temperature cleaning mode can be maintained at a suitable level and the conversion performance in the high-temperature cleaning mode can be improved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view which illustrates an exhaust gas control apparatus according to an embodiment of the present invention;
FIG. 2 is an overall view which schematically illustrates the configuration of an exhaust gas cleaning catalyst;
FIG. 3 is an enlarged view of a part of a rib wall of the exhaust gas cleaning catalyst;
FIG. 4 is a chart which shows the changes in air-fuel ratio of exhaust gas that flows into the exhaust gas cleaning catalyst;
FIG. 5 is a chart which shows the changes in air-fuel ratio of exhaust gas that flows into the exhaust gas cleaning catalyst;
FIG. 6A is a diagram that is shown to explain the NOx conversion reaction in the exhaust gas cleaning catalyst;
FIG. 6B is a diagram that is shown to explain the NOx conversion reaction in the exhaust gas cleaning catalyst;
FIG. 7 is a graph that shows the relationship between the temperature of the gas that flows into the exhaust gas cleaning catalyst and the NOx conversion efficiency;
FIG. 8A is a diagram that is shown to explain the NOx conversion reaction in the exhaust gas cleaning catalyst;
FIG. 8B is a diagram that is shown to explain the NOx conversion reaction in the exhaust gas cleaning catalyst;
FIG. 9 is a schematic side view of the exhaust gas cleaning catalyst;
FIG. 10 is a graph that shows the relationship between the distance from the exhaust gas inlet side end (upstream end) of each of catalyst samples 1 to 3 and the S-poisoning amount.
FIG. 11 is a diagram that schematically illustrates a control portion that is provided in the exhaust gas control apparatus according to one embodiment;
FIG. 12A is a diagram that is shown to explain a catalyst sample of Example, FIG. 12B is a diagram that is shown to explain a catalyst sample of Comparative Example 1, and FIG. 12C is a diagram that is shown to explain a catalyst sample of Comparative Example 2;
FIG. 13A is a diagram that is shown to explain the supply cycle for a lean simulant gas and a rich simulant gas in an NOx conversion test which simulated the low-temperature cleaning mode, and FIG. 13B is a diagram that is shown to explain the supply cycle for a lean simulant gas and a rich simulant gas in an NOx conversion test which simulated the high-temperature cleaning mode;
FIG. 14 is a graph which compares the NOx conversion efficiencies of Example and Comparative Examples 1 and 2 in an NOx conversion test which simulated the high-temperature cleaning mode; and
FIG. 15 is a graph which compares the NOx conversion efficiencies of Example and Comparative Examples 1 and 2 in an NOx conversion test which simulated the low-temperature cleaning mode.

### DETAILED DESCRIPTION OF EMBODIMENTS

Description is hereinafter made of embodiments of the present invention. It should be noted that the matters which are other than those that are specified in this specification, and which are necessary to implement the present invention can be regarded as matters of design variation by those skilled in the art based on related arts in the relevant technical field. The present invention can be implemented based on the disclosure in this specification and common general technical knowledge in the relevant technical field. In the following description, the exhaust gas with a lean, stoichiometric or rich air-fuel ratio refers to exhaust gas with an air-fuel ratio equivalent to that of exhaust gas which is discharged from an internal combustion engine when a lean, stoichiometric or rich mixed gas is burned in the internal combustion engine, or the exhaust gas after hydrocarbon is supplied by post injection.

(Exhaust Gas Control Apparatus) An exhaust gas control apparatus including an exhaust gas cleaning catalyst that is disclosed herein according to an embodiment is described with reference to the drawings. While a case where a diesel engine is provided as an internal combustion engine is herein described in detail as an example, this is not intended to limit the scope of application of the present invention to a diesel engine.

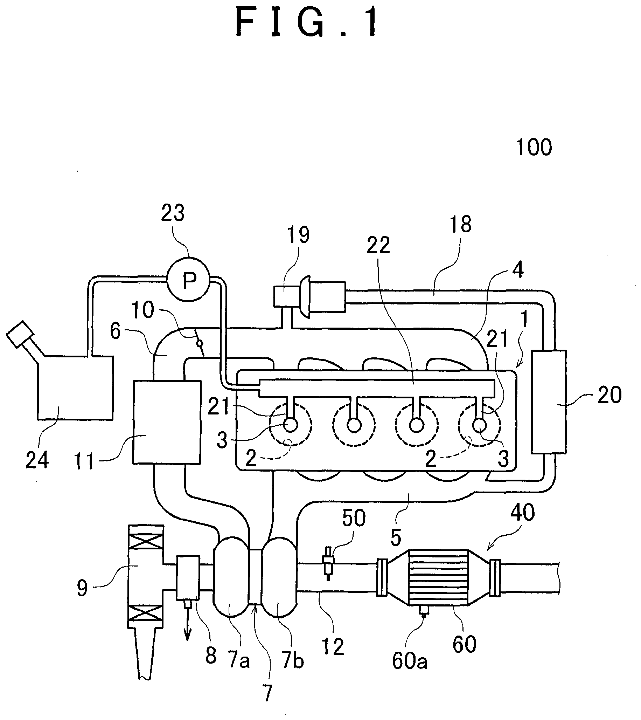

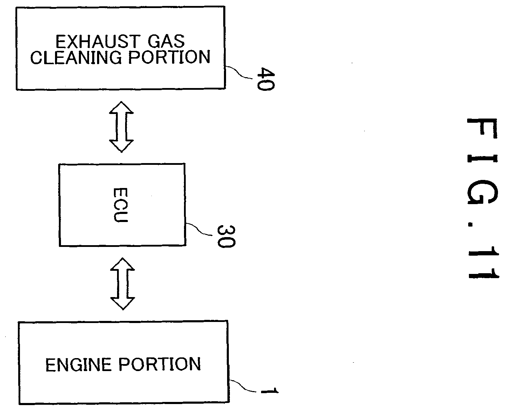

As shown in FIG. 1, an exhaust gas control apparatus 100 according to this embodiment is generally constituted by an engine portion 1 which includes a diesel engine as a main component (and an operation system including an accelerator which is used to drive the engine), an exhaust gas cleaning portion 40 which is provided in an exhaust system that communicates with the engine portion 1, and an ECU (electronic control unit, in other words, engine control unit) 30 (refer to FIG. 11) which performs the control between the exhaust gas cleaning portion 40 and the engine portion 1. An exhaust gas cleaning catalyst 60 that is employed by the present invention can be used as a part of the exhaust gas cleaning portion 40.

The engine portion 1 typically includes a plurality of combustion chambers 2, and fuel injection valves 3 which inject fuel into the combustion chambers 2. Each combustion chamber 2 communicates with an intake manifold 4 and an exhaust manifold 5. The intake manifold 4 is connected to the outlet of a compressor 7a of an exhaust turbocharger 7 via an air intake duct 6. The inlet of the compressor 7a is connected to an air cleaner 9 via an intake air amount detector 8. A throttle valve 10 is provided in the air intake duct 6. A cooling device (intercooler) 11 which cools the air that is flowing through the air intake duct 6 is provided around the air intake duct 6. The exhaust manifold 5 is connected to the inlet of an exhaust turbine 7b of the exhaust turbocharger 7. The outlet of the exhaust turbine 7b is connected to an exhaust passage (exhaust pipe) 12 through which exhaust gas flows.

The exhaust manifold 5 and the intake manifold 4 are coupled to each other via an exhaust gas recirculation passage 18 (which is hereinafter referred to as "EGR passage 18"). An electronically-controlled EGR control valve 19 is provided in the EGR passage 18. An EGR cooling device 20 which cools the EGR gas that is flowing through the EGR passage 18 is provided around the EGR passage 18.

The fuel injection valves 3 are connected to a common rail 22 via a fuel supply pipe 21. The common rail 22 is connected to a fuel tank 24 via a fuel pump 23. The fuel pump 23 supplies the fuel in the fuel tank 24 to the combustion chambers 2 through the common rail 22, the fuel supply pipe 21 and the fuel injection valves 3. The configuration of the fuel pump 23 does not specifically limit the present invention, and an electronically-controlled fuel pump which has a variable discharge rate, for example, can be used.

(Exhaust Gas Cleaning Portion) The exhaust gas cleaning portion 40 is provided in the exhaust passage (exhaust pipe) 12. The exhaust gas cleaning portion 40 includes a hydrocarbon supply valve 50 and the exhaust gas cleaning catalyst 60 that are disposed from the upstream side (the left side in FIG. 1) to the downstream side (the right side in FIG. 1), and the exhaust gas cleaning portion 40 converts NOx in exhaust gas from the internal combustion engine. The hydrocarbon supply valve 50 supplies (injects) hydrocarbon into the exhaust gas to adjust the hydrocarbon concentration in the exhaust gas which is supplied to the exhaust gas cleaning catalyst 60 (the phrase "adjust the hydrocarbon concentration in the exhaust gas" is hereinafter referred to also as "adjust the air-fuel ratio (A/F) of the exhaust gas"). Although not shown, an additional catalyst or the like may be provided downstream of the exhaust gas cleaning catalyst 60. For example, a particulate filter or the like which captures particulates in the exhaust gas may be provided downstream of the exhaust gas cleaning catalyst 60. In addition, an oxidation catalyst which modifies the hydrocarbon that has been injected from the hydrocarbon supply valve 50 (i.e., an oxidation catalyst which converts the hydrocarbon into radicals, for example) may be provided upstream of the exhaust gas cleaning catalyst 60 in the exhaust passage 12.

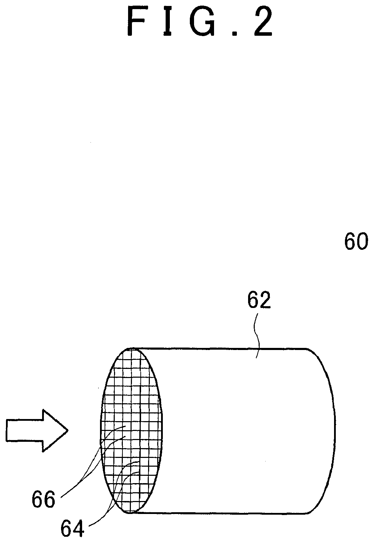

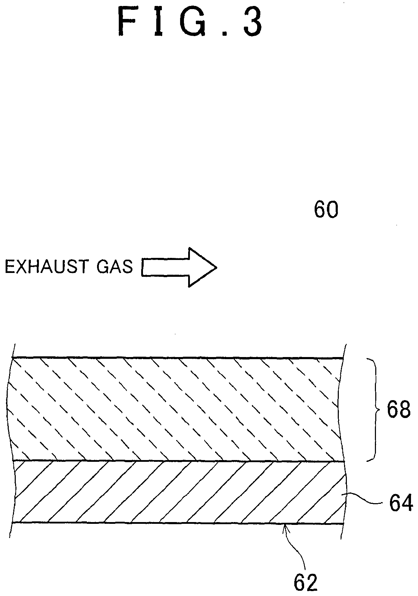

(Exhaust Gas Cleaning Catalyst) The exhaust gas cleaning catalyst 60 is a catalyst which is used to convert NOx in exhaust gas. The exhaust gas cleaning catalyst 60 is provided in the exhaust passage 12. The exhaust gas cleaning catalyst is configured by forming a catalyst layer on a substrate, and uses the catalytic function of the catalyst layer to remove NOx in exhaust gas. The details of the exhaust gas cleaning catalyst are described with reference to FIG. 2 and FIG. 3. FIG. 2 is a perspective view which schematically illustrates the exhaust gas cleaning catalyst 60, and FIG. 3 is an enlarged view which schematically illustrates an example of the sectional structure of the exhaust gas cleaning catalyst 60. The exhaust gas cleaning catalyst 60 according to this embodiment includes a substrate 62, a plurality of cells 66 which are arranged regularly, and rib walls 64 which define the cells 66.

(Substrate) As the substrate 62 of the exhaust gas cleaning catalyst 60 which is disclosed herein, any known substrate for an exhaust gas cleaning catalyst may be used. For example, the substrate 62 is preferably constituted by a heat resistant material with a porous structure. Examples of the heat resistant material include cordierite, silicon carbide (SiC), aluminum titanate, silicon nitride, and heat-resistant metals such as stainless steel and alloys thereof. The substrate preferably has a honeycomb structure or is in the form of a foam or pellet. The external shape of the entire substrate may be the shape of a circular cylinder, ellipsoidal cylinder or polygonal cylinder. In the exhaust gas cleaning catalyst 60 that is shown in FIG. 2, a cylindrical member with a honeycomb structure is adopted as the substrate 62.

(Catalyst Layer) In the exhaust gas cleaning catalyst 60 which is disclosed herein, a catalyst layer 68 is formed on the substrate 62. The catalyst layer 68 includes a plurality of kinds of noble metal catalysts and a carrier. In the exhaust gas cleaning catalyst 60 that is shown in FIG. 3, the catalyst layer 68 is formed on the surfaces of the rib walls 64 of the substrate 62. The exhaust gas that is supplied to the exhaust gas cleaning catalyst 60 flows through a flow path in the substrate 62, and pollutant components in the exhaust gas are converted (removed) upon contacting the catalyst layer 68. The catalyst layer 68 contains a plurality of kinds of noble metal catalysts and a carrier on which the noble metal catalysts are supported. In the exhaust gas cleaning catalyst 60 which is disclosed herein, an NOx absorbent is also supported on the carrier.

(Noble Metal Catalysts) The plurality of kinds of noble metal catalysts that are contained in the catalyst layer 68 need to have at least a function of catalyzing NOx in exhaust gas and includes at least platinum (Pt) and rhodium (Rh). Examples of usable noble metal catalyst other than platinum and rhodium include palladium (Pd), ruthenium (Ru), iridium (Ir) and osmium (Os). Especially, the use of palladium (Pd) can improve the heat resistance of the catalyst.

(Carrier) The catalyst layer 68 is formed by providing the noble metal catalysts on a carrier (typically, in the form of a powder). Examples of the carrier include metal oxides such as alumina (Al₂O₃), zirconia (ZrO₂), ceria (CeO₂), silica (SiO₂), magnesia (MgO) and titanium oxide (titania: TiO₂), and solid solutions of these substances (such as ceria-zirconia (CeO₂-ZrO₂) composite oxide). Above all, the use of alumina, zirconia or ceria-zirconia composite oxide is preferred. Two or more of these may be used in combination. In addition, some of the noble metal catalysts as listed above may be supported on different carriers. For example, a mixture of an alumina catalyst carrier on which platinum is supported, a zirconia catalyst carrier on which rhodium is supported and a ceria-zirconia composite oxide catalyst carrier on which an NOx absorbent (such as barium) is supported can be suitably used for the exhaust gas cleaning catalyst 60.

The carrier may contain an additional material (typically, inorganic oxide) as an accessory component. Examples of substances that can be added to the carrier include rare-earth elements such as lanthanum (La) and yttrium (Y), alkaline-earth elements such as calcium, and other transition metal elements. Above all, rare-earth elements, such as lanthanum and yttrium, are suitably used as a stabilizing agent because they can improve the specific surface area at high temperatures without interfering with the catalytic function.

(NOx Absorbent) An NOx absorbent which can store and release NOx is supported on the carrier (typically, in the form of a powder) of the exhaust gas cleaning catalyst 60 which is disclosed herein. The NOx absorbent has an NOx storage capacity and is capable of absorbing NOx in exhaust gas when the air-fuel ratio of the exhaust gas is in a lean (oxygen-excess) state and releasing the absorbed NOx when the air-fuel ratio is shifted to the rich side. As the NOx absorbent, a basic material which contains one or two or more metals that can provide electrons to NOx can be suitably used. Specific examples include alkaline metals such as potassium (K), sodium (Na) and cesium (Cs), alkaline-earth metals such as barium (Ba) and calcium (Ca), rare earths such as lanthanoids, and metals such as silver (Ag), copper (Cu), iron (Fe) and iridium (In). A metal oxide that contains such a metal is suitably used. Among the NOx absorbents that are listed above, metal oxides which contain an alkaline metal and/or an alkaline-earth metal (in particular, barium oxide) have a high NOx storage capacity and are suitable as the NOx absorbent for use in the exhaust gas cleaning catalyst which is disclosed herein.

The content of the NOx absorbent in the total volume of the exhaust gas cleaning catalyst 60 is preferably in the range of approximately 0.01 mol/L to 1.0 mol/L (more preferably 0.05 mol/L to 0.3 mol/L). When the content of the NOx absorbent is too small, a sufficient amount of NOx may not be absorbed even when the air-fuel ratio of exhaust gas is in a lean state. When the content of the NOx absorbent is too large, the catalytic function of the exhaust gas cleaning catalyst may be decreased because the surfaces of the carrier are covered with the NOx absorbent.

The amount of NOx that can be stored in the NOx absorbent (i.e., the saturation amount) decreases sharply when the temperature increases (for example, to 300°C or higher). Thus, the NOx absorbent cannot absorb NOx any more even when the air-fuel ratio is in a lean state. Thus, when the temperature is high, the NOx in exhaust gas may pass through the exhaust gas cleaning catalyst 60 to the downstream side, resulting in a decrease in the NOx conversion efficiency. Therefore, in the exhaust gas cleaning method which is disclosed herein, an NOx conversion treatment is performed by switching between two different cleaning modes depending on the temperature of the exhaust gas cleaning catalyst 60. In the following, the two NOx conversion treatments in the exhaust gas cleaning method of this embodiment are referred to as "high-temperature cleaning mode" and "low-temperature cleaning mode."

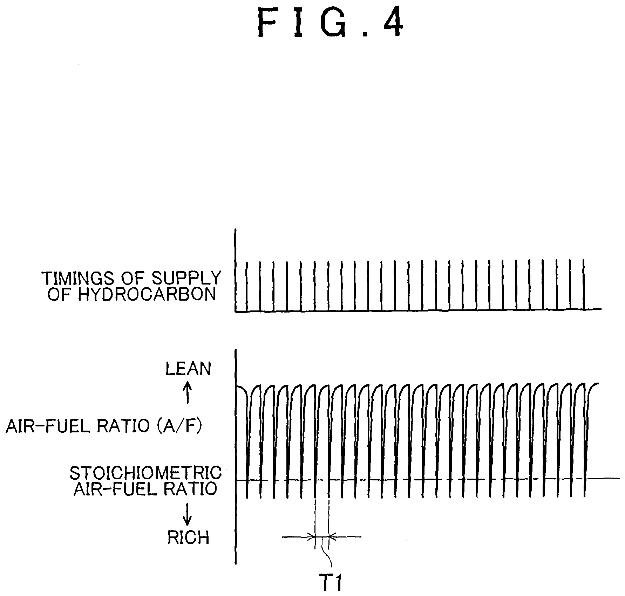

(High-Temperature Cleaning Mode) In the high-temperature cleaning mode, a treatment to convert NOx in exhaust gas is performed by alternately varying the concentration of the hydrocarbon that flows into the exhaust gas cleaning catalyst 60 between a high-concentration range in which the hydrocarbon concentration is relatively high (and in which the air-fuel ratio is typically richer or slightly leaner than the stoichiometric ratio) and a low-concentration range in which the hydrocarbon concentration is relatively low (and in which the air-fuel ratio is typically by far leaner than the stoichiometric ratio) in a predetermined cycle T1 as shown in FIG. 4 when the temperature of the exhaust gas cleaning catalyst 60 is equal to or higher than a prescribed reference value (300°C, for example). FIG. 4 shows the timings of supply of hydrocarbon and changes in the air-fuel ratio (A/F) of the exhaust gas that flows into the exhaust gas cleaning catalyst 60 in the high-temperature cleaning mode. Because the changes in the air-fuel ratio (A/F) are dependent on the changes in the hydrocarbon concentration in the exhaust gas that flows into the exhaust gas cleaning catalyst 60, the changes in the air-fuel ratio (A/F) that are shown in FIG. 4 can be regarded as showing changes in the hydrocarbon concentration. While the air-fuel ratio is richer than the stoichiometric ratio (stoichiometric air-fuel ratio) in the high-concentration range in the example that is shown in FIG. 4, the present invention is not limited thereto. The air-fuel ratio may be slightly leaner than the stoichiometric ratio.

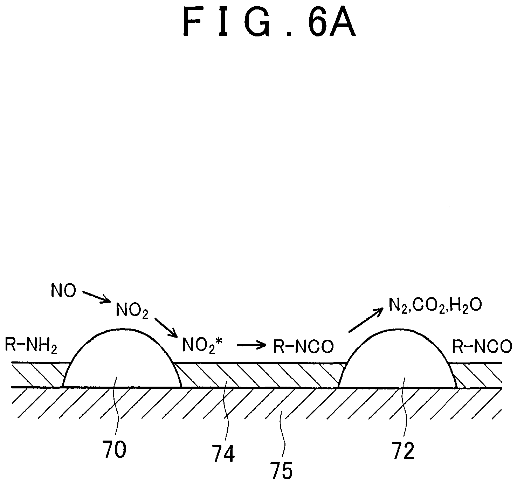

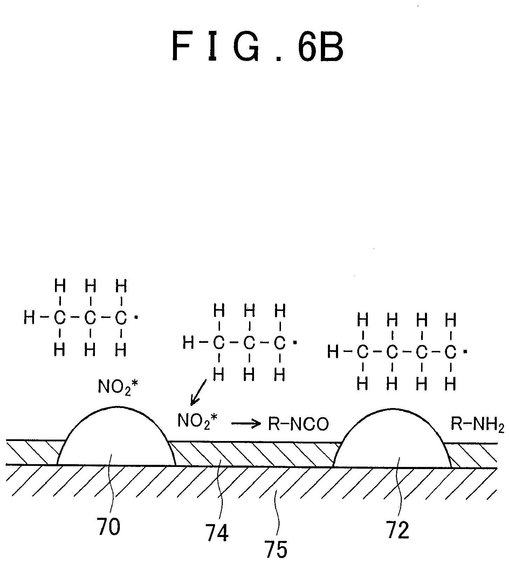

FIG. 6A and FIG. 6B schematically illustrate a surface portion of a carrier 75 of the exhaust gas cleaning catalyst 60, and shows a reaction which is assumed to occur when the concentration of the hydrocarbon that flows into the exhaust gas cleaning catalyst 60 is alternately varied between the high-concentration range and the low-concentration range in the high-temperature cleaning mode. FIG. 6A shows the reaction which occurs when the concentration of the hydrocarbon that flows into the exhaust gas cleaning catalyst 60 is low, and FIG. 6B shows the reaction which occurs when the concentration of the hydrocarbon that flows into the exhaust gas cleaning catalyst 60 is high. While a case where platinum 70, rhodium 72 and NOx absorbent 74 are supported on the same carrier 75 is shown in FIG. 6A and FIG. 6B, the present invention is not limited thereto. The materials may be supported on different carriers.

In the high-temperature cleaning mode, because the hydrocarbon concentration in the exhaust gas that flows into the exhaust gas cleaning catalyst 60 is maintained in the low-concentration range (in which the air-fuel ratio is typically in a lean (oxygen-excess) state) as shown in FIG. 4, the hydrocarbon concentration in the exhaust gas that flows into the exhaust gas cleaning catalyst 60 is usually in an oxygen-excess state. Thus, as shown in FIG. 6A, NO in the exhaust gas is oxidized on the platinum 70 by the excess oxygen into NO₂, which then receives electrons from the platinum 70 and turns into NO₂⁻. Because the NO₂⁻ is highly active, the NO₂⁻ is hereinafter referred to as "active NO₂*." Meanwhile, when hydrocarbon is supplied through the hydrocarbon supply valve 50, the hydrocarbon is modified and converted into radicals on the platinum 70. As a result, the hydrocarbon concentration around the active NO₂* increases as shown in FIG. 6B. When a state where the oxygen concentration around the active NO₂* is high continues for a specific period or longer after the formation of the active NO₂*, the active NO₂* is oxidized and absorbed by the NOx absorbent 74 in the form of nitrate ion NO₃⁻. However, when the hydrocarbon concentration around the active NO₂* is increased before the specific period of time has elapsed, the active NO₂* reacts with the hydrocarbon radicals on the platinum 70 to form a reducing intermediate as shown in FIG. 6B. The reducing intermediate adheres to or is adsorbed by the surface of the NOx absorbent 74. However, when the formed reducing intermediate is surrounded by hydrocarbon as shown in FIG. 6B, the hydrocarbon prevents the reducing intermediate from further reacting. In this case, when the concentration of the hydrocarbon that flows into the exhaust gas cleaning catalyst 60 is reduced and the oxygen concentration increases accordingly, the hydrocarbon around the reducing intermediate is oxidized. As a result, the reducing intermediate reacts with the active NO₂* as shown in FIG. 6A. At this time, the active NO₂* reacts with the reducing intermediate R-NCO or R-NH₂ to form N₂, CO₂ and H₂O. In this way, the NOx in the exhaust gas can be converted.

In the high-temperature cleaning mode, the reducing intermediate is produced when the concentration of hydrocarbon that flows into the exhaust gas cleaning catalyst 60 is increased, and the active NO₂* reacts with the reducing intermediate when the concentration of hydrocarbon that flows into the exhaust gas cleaning catalyst 60 is reduced to increase the oxygen concentration, whereby NOx is converted. Thus, to convert NOx efficiently with the exhaust gas cleaning catalyst 60, the concentration of the hydrocarbon that flows into the exhaust gas cleaning catalyst 60 needs to be varied periodically. In addition, when the intervals at which hydrocarbon is supplied are long, the period between the hydrocarbon supply timings, during which the oxygen concentration is high, may be long, so that the active NO₂* is absorbed in the form of nitrate by the NOx absorbent 74 without forming the reducing intermediate. To avoid this from occurring, the concentration of the hydrocarbon that flows into the exhaust gas cleaning catalyst 60 needs to be varied in a predetermined short cycle. For example, the concentration of the hydrocarbon that flows into the exhaust gas cleaning catalyst 60 is varied alternately between a high-concentration range (in which the air-fuel ratio is typically richer or slightly leaner than the stoichiometric ratio) and a low-concentration range (in which the air-fuel ratio is by far leaner than the stoichiometric ratio) in a cycle of 0.3 seconds to 5 seconds.

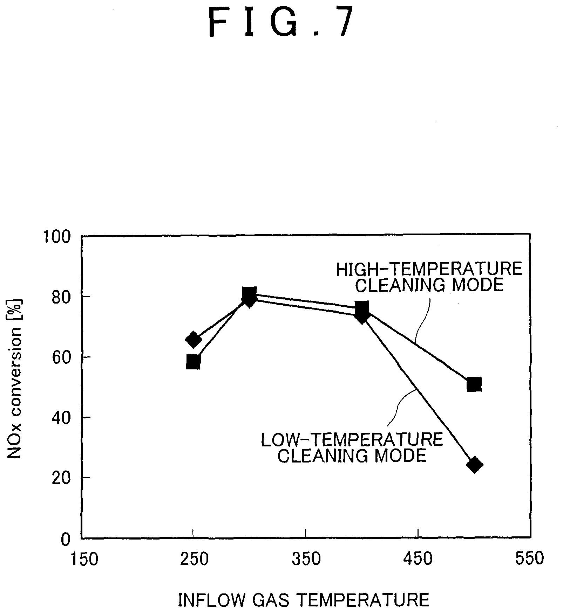

FIG. 7 shows changes in the NOx conversion efficiency with respect to the temperature of the exhaust gas cleaning catalyst 60 which are observed when the air-fuel ratio (A/F) of the exhaust gas that flows into the exhaust gas cleaning catalyst 60 is varied as shown in FIG. 4 by periodically varying the concentration of the hydrocarbon that flows into the exhaust gas cleaning catalyst 60. As shown in FIG. 7, it is obvious that, in the high-temperature range of approximately 280°C or higher (for example, 280°C to 500°C, preferably 400°C to 500°C), a higher NOx conversion efficiency can be obtained in the high-temperature cleaning mode than in the low-temperature cleaning mode.

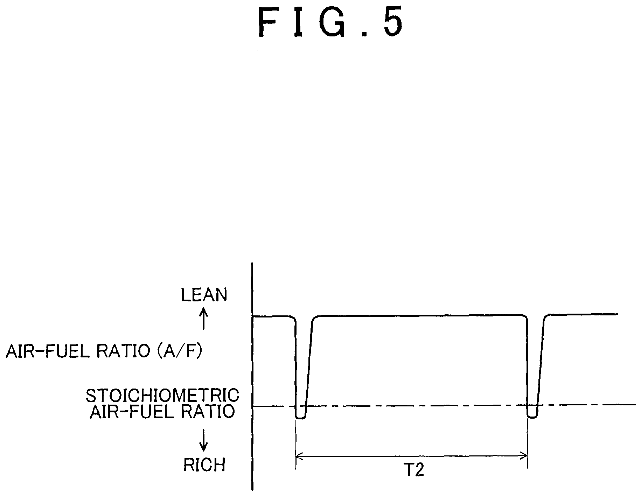

(Low-Temperature Cleaning Mode) In the low-temperature cleaning mode, a treatment to convert NOx in exhaust gas is performed by maintaining the concentration of hydrocarbon that flows into the exhaust gas cleaning catalyst 60 in a low-concentration range (in which the air-fuel ratio is typically by far leaner than the stoichiometric ratio) and temporarily shifting the concentration of hydrocarbon from the low-concentration range (in which the air-fuel ratio is typically leaner than the stoichiometric ratio) to a high-concentration range (in which the air-fuel ratio is typically equal to the stoichiometric ratio or richer than the stoichiometric ratio) at intervals T2 each of which is longer than the predetermined cycle T1 (i.e., the cycle in the high-temperature cleaning mode that is shown in FIG. 4) as shown in FIG. 5 when the temperature of the exhaust gas cleaning catalyst 60 is lower than the reference value (300°C, for example). FIG. 5 shows the changes in the air-fuel ratio (A/F) of the exhaust gas that flows into the exhaust gas cleaning catalyst 60 in the low-temperature cleaning mode. Because the changes in the air-fuel ratio (A/F) are dependent on the changes in the hydrocarbon concentration in the exhaust gas that flows into the exhaust gas cleaning catalyst 60, the changes in the air-fuel ratio (A/F) that are shown in FIG. 5 can be regarded as showing changes in the hydrocarbon concentration.

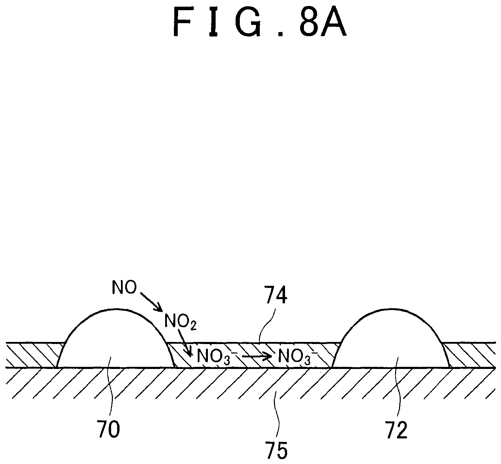

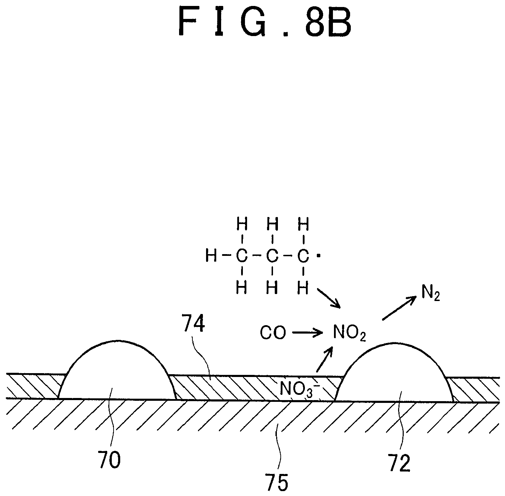

FIG. 8A and FIG. 8B schematically illustrate a surface portion of the carrier 75 of the exhaust gas cleaning catalyst 60 during the low-temperature cleaning mode. FIG. 8A shows the reaction which occurs when the concentration of the hydrocarbon that flows into the exhaust gas cleaning catalyst 60 is low, and FIG. 8B shows the reaction which occurs when the concentration of the hydrocarbon that flows into the exhaust gas cleaning catalyst 60 is high. While a case where platinum 70, rhodium 72 and NOx absorbent 74 are supported on the same carrier 75 is shown in FIG. 8A and FIG. 8B, the present invention is not limited thereto. The materials may be supported on different carriers.

In the low-temperature cleaning mode, when the cycle in which the hydrocarbon concentration is varied, in other words, each of the intervals at which hydrocarbon is supplied is set longer than the cycle T1 within the predetermined range as described above, the reducing intermediate disappears from the surface of the NOx absorbent 74 and, at this time, the NO₂ that is formed on the platinum 70 is dispersed in the form of nitrate ions in the NOx absorbent 74 and turns into nitrate as shown in FIG. 8A. In other words, at this time, the NOx in the exhaust gas is absorbed in the form of nitrate in the NOx absorbent 74. FIG. 8B shows the reaction which occurs when the air-fuel ratio of the exhaust gas that flows into the exhaust gas cleaning catalyst 60 is adjusted to be equal to or richer than the stoichiometric ratio when NOx has been absorbed in the form of nitrate in the NOx absorbent 74 as described above. In this case, because the oxygen concentration in the exhaust gas decreases, the reaction proceeds in the opposite direction (NO₃⁻ → NO₂) and the nitrate that has been absorbed in the NOx absorbent 74 sequentially turns into a nitrate ion NO₃⁻ and is released in the form of NO₂ from the NOx absorbent 74. Then, the released NO₂ is reduced on the rhodium 72 by the hydrocarbon and CO that are contained in the exhaust gas. In this way, the NOx in the exhaust gas can be converted.

In the low-temperature cleaning mode, NOx is absorbed by the NOx absorbent 74 when the concentration of the hydrocarbon that flows into the exhaust gas cleaning catalyst 60 is maintained in a low-concentration range (the air-fuel ratio is maintained in a lean state), and the NOx which has been absorbed in the NOx absorbent 74 is released and reduced at once when the concentration of the hydrocarbon that flows into the exhaust gas cleaning catalyst 60 is temporarily shifted to the high-concentration range (in which the air-fuel ratio is equal to the stoichiometric ratio or richer than the stoichiometric ratio) slightly before the NOx absorbing capacity of the NOx absorbent 74 is saturated. Thus, to clean (convert) NOx efficiently with the exhaust gas cleaning catalyst 60, the period during which a lean state is maintained (intervals between rich controls) needs to be long enough to allow the NOx absorbent 74 to absorb a sufficient amount of NOx. For example, it is to maintain the concentration of hydrocarbon that flows into the exhaust gas cleaning catalyst 60 in a low-concentration range (i.e., to maintain the air-fuel ratio at a ratio by far leaner than the stoichiometric ratio) for a maintaining period of 60 seconds or longer (60 seconds to 100 seconds, for example) and then shift the concentration of hydrocarbon to a high-concentration range (i.e., shift the air-fuel ratio to an air-fuel ratio typically richer or slightly leaner than the stoichiometric ratio) for a period equal to at most 10% of the maintaining period.

FIG. 7 shows changes in the NOx conversion efficiency with respect to the temperature of the exhaust gas cleaning catalyst 60 which are observed when the air-fuel ratio (A/F) of the exhaust gas that flows into the exhaust gas cleaning catalyst 60 is varied as shown in FIG. 5 by varying the concentration of the hydrocarbon that flows into the exhaust gas cleaning catalyst 60. As shown in FIG. 7, it is obvious that, in the low-temperature range in which the temperature is lower than approximately 280°C, a higher NOx conversion efficiency can be obtained in the low-temperature cleaning mode than in the high-temperature cleaning mode. Thus, it is preferable that the low-temperature cleaning mode be used when the temperature of the exhaust gas cleaning catalyst 60 is low and the high-temperature cleaning mode be used when the temperature of the exhaust gas cleaning catalyst 60 is high. In other words, in the exhaust gas cleaning method of this embodiment, the NOx conversion treatment is performed by switching the above two different cleaning modes depending on the temperature of the exhaust gas cleaning catalyst 60.

If a conventional exhaust gas cleaning catalyst in which the noble metals (Pt and Rh) are distributed uniformly in its entire portion is used, the exhaust gas control apparatus 100, in which the two cleaning modes as described above are used, may not fully utilize the conversion performance in each of the two cleaning modes. In the low-temperature cleaning mode in which the air-fuel ratio is maintained in a lean state for a long period and temporarily shifted to a stoichiometric or rich state as shown in FIG. 5, the NOx conversion reaction occurs in the entire exhaust gas cleaning catalyst 60 because one cycle is long and a large amount of HC is supplied at one time. In addition, because the NOx which has been absorbed in the NOx absorbent 74 is released at once when the air-fuel ratio is shifted to a stoichiometric or rich state, the released NOx needs to be quickly reduced (converted) on the rhodium (Rh) 72. Thus, in the low-temperature cleaning mode, an exhaust gas cleaning catalyst which contains a high proportion of rhodium 72, which has high reducing performance, is required. On the other hand, in the high-temperature cleaning mode in which the air-fuel ratio is alternately switched between a lean state and a stoichiometric or rich state at short intervals, the NOx conversion reaction zone (the zone where the NOx conversion reaction occurs) is limited to an upstream portion of the exhaust gas cleaning catalyst 60 including the exhaust gas inlet side end thereof (the upstream half of the catalyst, for example) because one cycle is short and a small amount of HC is supplied at one time. In addition, the catalyst performance required in the high-temperature cleaning mode is different from the catalyst performance required in the low-temperature cleaning mode. Because it is necessary to switch the air-fuel ratio to a stoichiometric or rich state within a short period (in order to burn the hydrocarbon quickly on the platinum (Pt) 70), an exhaust gas cleaning catalyst which contains a high proportion of platinum 70, which has high oxidation performance, is required.

Based on these findings, the inventors of the present invention make the Pt/Rh ratio (the ratio of platinum (Pt) to rhodium (Rh)) in the upstream portion of the exhaust gas cleaning catalyst 60 different from the Pt/Rh ratio in the downstream portion of the exhaust gas cleaning catalyst 60 so that the upstream portion has high oxidizing performance, which is advantageous for the conversion performance in the high-temperature cleaning mode, and the downstream portion has high reducing performance, which is advantageous for the conversion performance in the low-temperature cleaning mode.

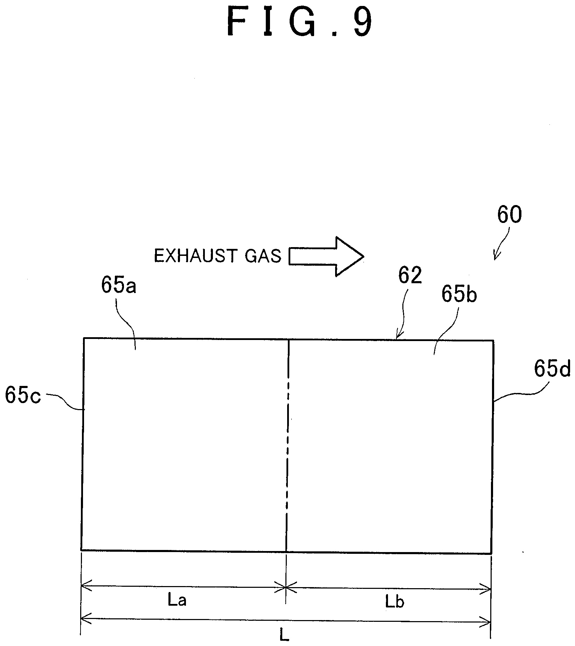

(Upstream Portion and Downstream Portion) Specifically, as shown schematically in FIG. 9, the exhaust gas cleaning catalyst 60 includes an upstream portion 65a and a downstream portion 65b. The upstream portion 65a is a portion which includes an exhaust gas inlet side end 65c of the exhaust gas cleaning catalyst 60, and the downstream portion 65b is a portion which includes an exhaust gas outlet side end 65d of the exhaust gas cleaning catalyst 60. In this embodiment, the upstream portion 65a has a length equal to 25% to 60% of the length (preferably 25% to 50%, in other words, 1/4 (one-fourth) to 1/2 (half) of the entire length) of the exhaust gas cleaning catalyst (substrate), and extends from the exhaust gas inlet side end (upstream end) 65c toward an exhaust gas outlet (downstream side) of the exhaust gas cleaning catalyst. The downstream portion 65b is the part other than the upstream portion 65a. In other words, the downstream portion 65b is a portion which is located downstream of the upstream portion 65a. When the entire length of the exhaust gas cleaning catalyst (substrate), the entire length of the upstream portion 65a and the entire length of the downstream portion 65b are represented by L, La and Lb, respectively, La = 0.25L to 0.60L and La + Lb = L. The length L of the exhaust gas cleaning catalyst (substrate), which is not specifically limited, is approximately 100 mm to 300 mm, preferably 120 mm to 180 mm. The length of the substrate can be measured with a known length measurement instrument, such as a gauge scale.

The upstream portion 65a is configured to have a higher Pt/Rh ratio than the downstream portion 65b to improve the conversion performance in the high-temperature cleaning mode. On the other hand, the downstream portion 65b is configured to have a lower Pt/Rh ratio than the upstream portion 65a to improve the conversion performance in the low-temperature cleaning mode. The amount of each noble metal can be measured with a plasma emission spectrometer (ICP), for example.

In the exhaust gas cleaning catalyst 60, the upstream portion 65a is configured to have a higher Pt/Rh mass ratio than the downstream portion 65b so that the upstream portion 65a has a characteristic advantageous for the high-temperature cleaning mode, in which only the upstream portion 65a of the exhaust gas cleaning catalyst is used. Thus, the NOx conversion performance in the high-temperature cleaning mode can be further improved. In addition, the downstream portion 65b of the exhaust gas cleaning catalyst 60 is configured to have a lower Pt/Rh mass ratio than the upstream portion 65a so that the downstream portion 65b has a characteristic advantageous for the low-temperature cleaning mode, in which the entire catalyst is used. Thus, the conversion activity can be maintained at a suitable level in the low-temperature cleaning mode. In addition, because the upstream portion 65a has a length equal to 25% to 60% of the length of the exhaust gas cleaning catalyst 60 and extends from the exhaust gas inlet side end 65c toward the exhaust gas outlet of the exhaust gas cleaning catalyst 60, the conversion activity is effectively maintained in the low-temperature cleaning mode and the conversion performance is effectively improved in the high-temperature cleaning mode. Therefore, when the exhaust gas cleaning catalyst 60 is used, it is possible to significantly improve the NOx conversion performance of the exhaust gas control apparatus in which the two cleaning modes as described above are used.

(Pt/Rh Ratio in Upstream Portion) It is appropriate that the Pt/Rh ratio in the upstream portion 65a should be equal to or higher than approximately 9 (e.g., equal to or higher than 9 and equal to or lower than 25), preferably equal to or higher than 10 (e.g., equal to or higher than 10 and equal to or lower than 25), especially preferably equal to or higher than 15 (e.g., equal to or higher than 15 and equal to or lower than 20). When the Pt/Rh ratio in the upstream portion 65a is equal to or higher than 9, the air-fuel ratio can be switched to a stoichiometric or rich state at once within a short period in the high-temperature cleaning mode. Thus, the improvement of conversion performance in the high-temperature cleaning mode can be achieved more effectively. It is not preferable that the Pt/Rh ratio in the upstream portion 65a be too high, because if the Pt/Rh ratio in the upstream portion 65a is too high, the content of Rh is so low that the catalytic activity (especially, reducing catalytic activity), which is provided by Rh, is insufficient.

(Pt/Rh Ratio in Downstream Portion) It is appropriate that the Pt/Rh ratio in the downstream portion 65b should be lower than approximately 9 (e.g., equal to or higher than 1 and lower than 9), preferably equal to or lower than 6 (e.g., equal to or higher than 2 and equal to or lower than 6), especially preferably equal to or lower than 5 (e.g., equal to or higher than 3 and equal to or lower than 5). When the Pt/Rh ratio in the downstream portion 65b is lower than 9, the NOx which is released at once from the NOx absorbent can be quickly reduced in the low-temperature cleaning mode. Thus, the maintenance of conversion performance in the low-temperature cleaning mode can be achieved more effectively. It is not preferable that the Pt/Rh ratio in the downstream portion 65b be too low, because if the Pt/Rh ratio in the downstream portion 65b is too low, the content of Pt is so low that the catalytic activity (especially, oxidizing catalytic activity), which is provided by Pt, is insufficient.

(Rate of supported Pt and Rh) Although not specifically limited, it is appropriate that the content of Pt in the total volume of the exhaust gas cleaning catalyst 60 is usually 0.5 mol/L to 10 mol/L, preferably 0.5 mol/L to 7.0 mol/L, for example. If the amount of supported Pt is too small, the catalytic activity (especially, oxidizing catalytic activity), which is provided by Pt, is insufficient. On the other hand, if the amount of supported Pt is too large, grain growth of Pt is likely to be caused, and the structure is also disadvantageous in terms of cost. It is appropriate that the content of Rh in the total volume of the exhaust gas cleaning catalyst 60 is usually 0.01 mol/L to 1.0 mol/L, preferably 0.1 mol/L to 0.5 mol/L, for example. If the amount of supported Rh is too small, the catalytic activity (especially, reducing catalytic activity), which is provided by Rh, is insufficient. On the other hand, if the amount of supported Rh is too large, grain growth of Rh is likely to be caused, and the structure is also disadvantageous in terms of cost.

(Method for Production of Exhaust Gas Cleaning Catalyst) The exhaust gas cleaning catalyst 60 can be produced by the following method, for example. It should be noted that the method that is described below is merely one example of the method for the production of the exhaust gas cleaning catalyst 60. The exhaust gas cleaning catalyst 60 may be produced by a different method.

First, a slurry is prepared by mixing an alumina powder (carrier) on which Pt is supported, a zirconia powder (carrier) on which Rh is supported, and a ceria-zirconia composite oxide powder (carrier) on which barium (NOx absorbent) is supported such that the Pt/Rh ratio is 9 or higher (18, for example). Then, in a metal substrate or a substrate made of cordierite or the like, a portion whose length is equal to 25% to 60% of the entire length of the substrate and which extends from one axial end of the substrate is coated with the slurry by wash coating, and the portion is then dried and calcined to form a coat layer on surfaces of the portion of the substrate. This portion serves as the upstream portion 65a of the exhaust gas cleaning catalyst. Next, a slurry is prepared by mixing an alumina catalyst carrier powder on which Pt is supported, a zirconia catalyst carrier powder on which Rh is supported, and a ceria-zirconia composite oxide catalyst carrier powder on which barium (NOx absorbent) is supported such that the Pt/Rh ratio is lower than 9 (4, for example). Then, the remaining portion of the substrate is coated with the slurry by wash coating, and the remaining portion is dried and calcined to form a coat layer on the remaining surfaces of the substrate. This portion serves as the downstream portion 65b of the exhaust gas cleaning catalyst. In this way, the exhaust gas cleaning catalyst 60, which includes the upstream portion 65a and the downstream portion 65b, can be obtained.

(NOx Conversion Reaction Zone of Exhaust Gas Cleaning Catalyst) The NOx conversion reaction zone of the exhaust gas cleaning catalyst in the high-temperature cleaning mode is next described. The inventors of the present invention conducted an experiment in which the NOx conversion efficiency was measured using a plurality of exhaust gas cleaning catalyst samples with different S (sulfur) poisoning amount distributions. In this experiment, exhaust gas cleaning catalysts with a diameter of 129 mm and a length of 150 mm were used as samples 1 to 3. The S-poisoning amount distribution in the direction in which exhaust gas flows into the catalyst (the distribution of S-poisoning amount with respect to the distance from the exhaust gas inlet side end of the catalyst) was different among the samples 1 to 3. On each sample, Pt and Ph were supported as noble metal catalysts and barium was supported as an NOx absorbent.

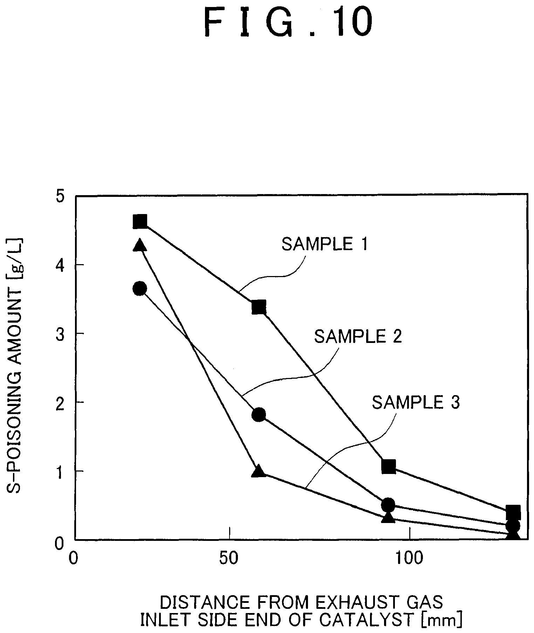

Each sample was prepared as follows. First, a slurry which contained an alumina powder on which Pt was supported, a zirconia powder on which Rh was supported, and a ceria-zirconia composite oxide powder on which barium was supported was prepared. Then, a cordierite substrate (such as a honeycomb substrate that is shown in FIG. 2) was coated with the slurry by wash coating, and was then dried and calcined. The cordierite substrate thereby contained 2.2 g/L of Pt and 0.25 g/L of Rh per liter of its volume. Then, the produced catalyst sample was subjected to an S-poisoning treatment by passing a reaction gas that contained SO₂ gas through the catalyst sample while the temperature was raised and lowered according to a prescribed treatment pattern. The S-poisoning amount distributions on the catalyst samples 1 to 3 are shown in FIG. 10. Here, each catalyst sample was divided into four parts according to the distance from the exhaust gas inlet side end, and the S-poisoning amounts in the 0 mm to 38 mm, 38 mm to 75 mm, 75 mm to 113 mm and 113 mm to 150 mm sections were measured. As shown in FIG. 10, the difference in the S-poisoning amount among the catalyst samples 1 to 3 was the greatest in the upstream sections of the catalysts, the distance of which from the exhaust gas inlet side end was 38 mm to 75 mm, and there was no large difference in the S-poisoning amount in the downstream sections of the catalysts.

The above catalyst samples were tested for their ability to clean an NOx-containing exhaust gas. Specifically, each catalyst sample was placed in a tubular reactor and heated to 300°C with an external heater. Then, an NOx conversion treatment was performed by alternately passing a gas which had a composition simulating that of a lean exhaust gas (lean simulant gas) and a gas which had a composition simulating that of a rich exhaust gas (rich simulant gas) through the catalyst sample. The lean simulant gas had a composition of NOx:HC:CO:CO₂:O₂:H₂O = 200 ppm:100 ppm:0%:10%:8%:3% with the balance being N₂. The rich simulant gas had a composition of NOx:HC:CO:CO₂:O₂:H₂O = 200 ppm:2000 ppm:0%:10%:0%:3% with the balance being N₂. The gas supply cycle consisted of supplying the lean simulant gas for two seconds and then supplying the rich simulant gas for three seconds (refer to FIG. 13B). This supply pattern corresponds to the high-temperature cleaning mode of this embodiment in which the air-fuel ratio is alternately switched between a lean state and a rich state in a short cycle (one cycle is five seconds or shorter, for example). Then, the NOx concentrations in the gas before and after the treatment were measured to calculate the NOx conversion efficiency.

As a result, the NOx conversion efficiencies of the catalyst samples 1 to 3 were 10%, 50% and 95%, respectively. As shown in FIG. 10, because the difference in the S-poisoning amount among the catalyst samples 1 to 3 was the greatest in the upstream sections of the catalysts, the distance of which from the exhaust gas inlet side end was 38 mm to 75 mm, and there was no large difference in the S-poisoning amount in the downstream sections of the catalysts. It is, therefore, considered that the difference in the S-poisoning amount in the upstream portions has a profound effect on the results of the NOx conversion efficiency. In other words, in the high-temperature cleaning mode in which the air-fuel ratio is alternately switched between a lean state and a rich state in a short cycle (one cycle is five seconds or shorter, for example), the NOx conversion reaction in the exhaust gas cleaning catalyst is considered to be completed in the upstream portion of the catalyst.

The exhaust gas cleaning catalyst 60 of the exhaust gas control apparatus 100 which is disclosed herein has been described in the foregoing. Other components of the exhaust gas control apparatus 100 which is disclosed herein are next described.

As shown in FIG. 1, the exhaust gas cleaning catalyst 60 is provided with a temperature sensor 60a which detects the temperature of the catalyst 60. The temperature sensor 60a may be replaced by another means which can estimate the catalyst temperature, and the installation position of the temperature sensor 60a (or another means) is not limited to the position in the drawing. In addition, the installation position of the hydrocarbon supply valve 50 is not limited to the position as described above and the hydrocarbon supply valve 50 may be provided at any location as long as it can supply fuel into the exhaust gas upstream of the exhaust gas cleaning catalyst 60.

(Control Portion (ECU)) As shown in FIG. 11, a control portion (ECU) 30, which is a unit that performs control between the engine portion 1 and the exhaust gas cleaning portion 40, includes electronic devices, such as a digital computer, as constituent elements as in the case of commonly-used control devices. Typically, the ECU 30 includes a ROM (read-only memory), a RAM (random access memory), a CPU (microprocessor), an input port and an output port which are connected to each other by a bidirectional bus. A load sensor which generates an output voltage proportional to the depression amount of the accelerator pedal is connected to an accelerator pedal (not shown). The output voltage from the load sensor is input into the input port via a corresponding AD converter. A crank angle sensor which generates an output pulse every time the crankshaft rotates by a prescribed angle (10°, for example) is also connected to the input port.

The output signal from the temperature sensor 60a of the exhaust gas cleaning portion 40 is input into the input port of the ECU 30 via the corresponding AD converter. The output port of the ECU 30 is connected to the fuel injection valves 3, a step motor which drives the throttle valve 10, the EGR control valve 19, the fuel pump 23 and the hydrocarbon supply valve 50 via corresponding drive circuits. As described above, the fuel injection valves 3, the hydrocarbon supply valve 50, and so on are controlled by the ECU 30. For example, the ECU 30 can cause the hydrocarbon supply valve 50 in the exhaust passage 12 to supply hydrocarbon in a spot manner (or periodically) to decrease the oxygen concentration in the exhaust passage 12 at a position upstream of the exhaust gas cleaning catalyst 60 (to switch the air-fuel ratio of the exhaust gas from a lean state to a stoichiometric or rich state).

Specifically, the ECU (control portion) 30 causes the hydrocarbon supply valve 50 to supply (inject) hydrocarbon (HC) into the exhaust passage 12 based on the temperature information (signal) from the temperature sensor 60a provided at the exhaust gas cleaning catalyst 60. The supply of hydrocarbon is carried out in the two different cleaning modes which have been described above, in other words, the high-temperature cleaning mode and low-temperature cleaning mode, based on the temperature information (signal) input from the temperature sensor 60a.

Specifically, the ECU 30 is configured to execute the high-temperature cleaning mode in which a treatment to convert NOx in exhaust gas is performed by alternately varying the concentration of hydrocarbon that flows into the exhaust gas cleaning catalyst 60 between a high-concentration range (in which the air-fuel ratio is typically richer or slightly leaner than the stoichiometric ratio) and a low-concentration range (in which the air-fuel ratio is typically by far leaner than the stoichiometric ratio) in the predetermined cycle T1 (refer to FIG. 4) based on the detection of the fact that the value (temperature signal), which is input from the temperature sensor 60a at prescribed time intervals, is equal to or greater than a prescribed reference value (in other words, detection of a temperature equal to or higher than a reference value). The reference value for the temperature of the exhaust gas cleaning catalyst may be set to be in the range of 300°C to 500°C, for example. The ECU 30 is configured to activate the hydrocarbon supply valve 50 at predetermined supply intervals to supply hydrocarbon into the exhaust passage 12 when the temperature of the exhaust gas cleaning catalyst 60 is equal to or higher than a prescribed reference value (300°C, for example). Alternatively, the ECU 30 may control the hydrocarbon concentration to switch the gas atmosphere as shown in FIG. 4 by increasing and decreasing the amount of fuel injected from the fuel injection valves 3. The ECU 30 is configured to alternately vary the concentration of hydrocarbon that flows into the exhaust gas cleaning catalyst 60 between the high-concentration range and the low-concentration range in a cycle of 0.3 seconds to 5 seconds in the high-temperature cleaning mode.

The ECU 30 is also configured to execute the low-temperature cleaning mode in which a treatment to convert NOx in exhaust gas is performed by maintaining the concentration of hydrocarbon that flows into the exhaust gas cleaning catalyst 60 in the low-concentration range and temporarily shifting the concentration of hydrocarbon from the low-concentration range to the high-concentration range at the intervals T2 (refer to FIG. 5) each of which is longer than the predetermined cycle T1 (refer to FIG. 4) based on the detection of the fact that the value (temperature signal) which is input from the temperature sensor 60a in a prescribed time cycle is smaller than a prescribed reference value (in other words, detection of a temperature lower than a reference value). In this embodiment, the ECU 30 is configured to maintain the air-fuel ratio in a lean state and activate the hydrocarbon supply valve 50 to supply hydrocarbon into the exhaust passage 12 at the supply intervals T2 each of which is longer than the predetermined cycle T1 when the temperature of the exhaust gas cleaning catalyst 60 is lower than a prescribed reference value (300°C, for example). Alternatively, the ECU 30 may control the hydrocarbon concentration to switch the gas atmosphere as shown in FIG. 5 by increasing and decreasing the amount of fuel injected from the fuel injection valves 3. The ECU 30 is configured to maintain the concentration of hydrocarbon that flows into the exhaust gas cleaning catalyst 60 in the low-concentration range for a maintaining period of 60 seconds to 100 seconds and then shift the concentration of hydrocarbon to the high-concentration range for a period equal to at most 10% of the maintaining period in the low-temperature cleaning mode.

The exhaust gas control apparatus 100 with the above configuration can implement the above exhaust gas cleaning method appropriately. In other words, according to the exhaust gas control apparatus 100 with the above configuration, because the cleaning mode is appropriately switched between the low-temperature cleaning mode and the high-temperature cleaning mode depending on the temperature of the exhaust gas cleaning catalyst 60, the NOx conversion performance can be significantly improved. In addition, because the exhaust gas cleaning catalyst 60, in which the upstream portion 65a has a higher Pt/Rh ratio than the downstream portion 65b, is provided in the exhaust passage 12, the conversion activity in the low-temperature cleaning mode can be maintained at a suitable level and the conversion performance in the high-temperature cleaning mode can be improved.

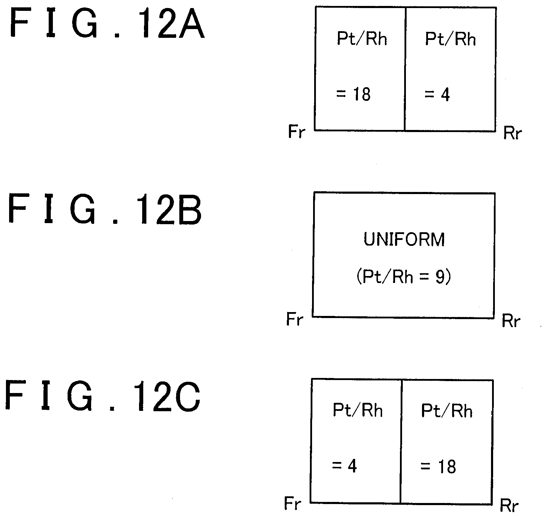

Examples are described below. It should be noted, however, that the present invention is not limited to the following examples.
(1) Preparation of Catalyst Sample (Example) A slurry was prepared by mixing an alumina powder (carrier) on which Pt was supported, a zirconia powder (carrier) on which Rh was supported, and a ceria-zirconia composite oxide powder (carrier) on which barium (NOx absorbent) was supported such that the Pt/Rh ratio was 18. In a cordierite substrate (honeycomb substrate as shown in FIG. 2), a portion whose length was equal to 50% of the entire length of the substrate and which extended from one axial end of the substrate was coated with the slurry by wash coating, and the portion was then dried and calcined to form a coat layer on surfaces of the portion of the substrate. This portion served as the upstream portion of the exhaust gas cleaning catalyst. The Pt content and Rh content in the upstream portion were 4.4 g/L and 0.25 g/L, respectively, per liter of the volume of the substrate. Here, the term "per liter" refers to per liter of the bulk volume of the entire substrate including the net volume of the honeycomb substrate and the volume of the cell passages. The same applies to the following description. Next, a slurry was prepared by mixing an alumina catalyst carrier powder on which Pt was supported, a zirconia catalyst carrier powder on which Rh was supported deposited, and a ceria-zirconia composite oxide catalyst carrier powder on which barium (NOx absorbent) was supported such that the Pt/Rh ratio was 4. Then, the remaining portion of the substrate was coated with the slurry by wash coating, and the remaining portion was dried and calcined to form a coat layer on the remaining surfaces of the substrate. This portion served as the downstream portion of the exhaust gas cleaning catalyst. The Pt content and Rh content in the downstream portion were 2.2 g/L and 0.5 g/L, respectively, per liter of the volume of the substrate. In this way, an exhaust gas cleaning catalyst which had an upstream portion and a downstream portion with different Pt/Rh ratios (refer to FIG. 12A) was prepared.

(Comparative Example 1) An exhaust gas cleaning catalyst was prepared in the same manner as in Example except that the upstream portion and the downstream portion had the same Pt/Rh ratio as shown in FIG. 12B. In this example, the Pt/Rh ratio was 9. The Pt content and Rh content in the catalyst were 3.3 g/L and 0.38 g/L, respectively, per liter of the volume of the substrate.

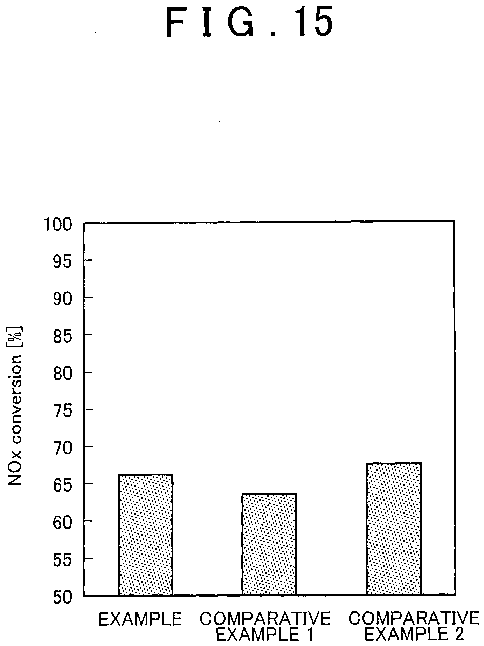

(Comparative Example 2) An exhaust gas cleaning catalyst was prepared in the same manner as in Example except that the upstream portion had a Pt/Rh ratio of 4 and the downstream portion had a Pt/Rh ratio of 18 as shown in FIG. 12C. The Pt content and Rh content in the upstream portion were 2.2 g/L and 0.5 g/L, respectively, per liter of the volume of the substrate. The Pt content and Rh content in the downstream portion were 4.4 g/L and 0.25 g/L, respectively, per liter of the volume of the substrate.
(2) NOx Conversion Test (High-Temperature Cleaning Mode) The catalyst samples of Examples which were obtained as described above were tested for their ability to clean an NOx-containing exhaust gas under conditions which simulated the high-temperature cleaning mode that is described above. Specifically, each catalyst sample was placed in a tubular reactor and heated to 300°C with an external heater. Then, an NOx conversion treatment was performed by alternately passing a gas which had a composition simulating that of a lean exhaust gas (lean simulant gas) and a gas which had a composition simulating that of a rich exhaust gas (rich simulant gas) through the catalyst sample. The lean simulant gas had a composition of NOx:HC:CO:CO₂:O₂:H₂O = 200 ppm:100 ppm:0%:10%:8%:3% with the balance being N₂. The rich simulant gas had a composition of NOx:HC:CO:CO₂:O₂:H₂O = 200 ppm:2000 ppm:0%:10%:0%:3% with the balance being N₂. The gas supply cycle consisted of supplying the lean simulant gas for two seconds and then supplying the rich simulant gas for three seconds (refer to FIG. 13B). This supply pattern corresponds to the high-temperature cleaning mode of this embodiment in which the air-fuel ratio is alternately switched between a lean state and a rich state in a short cycle (one cycle is five seconds or shorter, for example). Then, the NOx concentrations in the gas before and after the treatment were measured to calculate the NOx conversion efficiency. The results are shown in FIG. 14.
   As is obvious from FIG. 14, the catalyst sample of Comparative Example 1, in which the upstream portion and the downstream portion had the same Pt/Rh ratio, and the catalyst sample of Comparative Example 2, in which the upstream portion had a lower Pt/Rh ratio than the downstream portion, had poor conversion activity with an NOx conversion efficiency of lower than 75%. In contrast, the catalyst sample of Example, in which the upstream portion had a higher Pt/Rh ratio than the downstream portion, had much higher conversion activity than the catalyst samples of Comparative Examples 1 and 2 with an NOx conversion efficiency higher than 90%. Because the above phenomenon was observed in spite of the fact that the catalyst samples contained the same amount of Pt and Rh as a whole, it is considered that the Pt/Rh ratio in the upstream portion has a profound effect on the conversion performance in the high-temperature cleaning mode. This demonstrates that the conversion performance in the high-temperature cleaning mode can be improved by relatively increasing the Pt/Rh ratio in the upstream portion of the exhaust gas cleaning catalyst. In the case of the catalyst sample that was tested herein, the Pt/Rh ratio in the upstream portion is preferably 18 or higher from the viewpoint of improvement of the conversion performance in the high-temperature cleaning mode.
(3) NOx Conversion Test (Low-Temperature Cleaning Mode) The catalyst samples of Examples were tested for their ability to clean an NOx-containing exhaust gas under conditions which simulated the low-temperature cleaning mode. Specifically, each catalyst sample was placed in a tubular reactor and heated to 250°C with an external heater. Then, an NOx conversion treatment was performed by alternately passing a gas which had a composition simulating that of a lean exhaust gas (lean simulant gas) and a gas which had a composition simulating that of a rich exhaust gas (rich simulant gas) through the catalyst sample. The lean simulant gas had a composition of NOx:HC:CO:CO₂:O₂:H₂O = 200 ppm:100 ppm:0%:10%:8%:3% with the balance being N₂. The rich simulant gas had a composition of NOx:HC:CO:CO₂:O₂:H₂O = 200 ppm:4000 ppm:1.2%:10%:0%:3% with the balance being N₂. The gas supply cycle consisted of supplying the lean simulant gas for 60 seconds and then supplying the rich simulant gas for five seconds (refer to FIG. 13A). This supply pattern corresponds to the low-temperature cleaning mode of this embodiment in which the air-fuel ratio is maintained in a lean state for a long period and temporarily shifted to a rich state. Then, the NOx concentrations in the gas before and after the treatment were measured to calculate the NOx conversion efficiency. The results are shown in FIG. 15.

As is obvious from FIG. 15, the catalyst sample of Comparative Example 1, in which the upstream portion and the downstream portion had the same Pt/Rh ratio, had poor conversion activity with an NOx conversion efficiency lower than 65%. In contrast, the catalyst sample of Example, in which the Pt/Rh ratio in the downstream portion was lower than that in Comparative Example 1, exhibited higher NOx conversion performance than the catalyst sample of Comparative Example 1 with an NOx conversion efficiency higher than 65%. Because the NOx conversion performance improved in spite of the fact that the catalyst samples contained the same amount of Pt and Rh as a whole, it is considered that the Pt/Rh ratio in the downstream portion has a profound effect on the conversion performance in the low-temperature cleaning mode. This demonstrates that the conversion performance in the low-temperature cleaning mode can be improved by relatively decreasing the Pt/Rh ratio in the downstream portion of the exhaust gas cleaning catalyst. In the case of the catalyst sample that was tested herein, the Pt/Rh ratio in the downstream portion is preferably 4 or lower from the viewpoint of improvement of the conversion performance in the low-temperature cleaning mode.

While specific examples of the present invention have been described in detail in the foregoing, these examples are merely for illustrative purpose and not intended to limit the scope of claims. The technical scope that is described in claims includes various variations and modifications of the above specific examples.

## Claims

1. An exhaust gas cleaning method for converting NOx in exhaust gas from an internal combustion engine using an exhaust gas cleaning catalyst that is provided in an exhaust passage of the internal combustion engine, **characterized in that**:
as the exhaust gas cleaning catalyst an exhaust gas cleaning catalyst is used which is provided in an exhaust passage of an internal combustion engine to convert NOx in exhaust gas, the exhaust gas cleaning catalyst comprising:
a carrier;
a plurality of kinds of metal catalysts which are supported on the carrier; and
an NOx absorbent, made of a metal oxide which contains at least one of an alkaline metal and an alkaline-earth metal, which is supported on the carrier and has an NOx storage capacity,
wherein the exhaust gas cleaning catalyst includes at least platinum (Pt) and rhodium (Rh) as the metal catalysts, and
wherein a Pt/Rh mass ratio in an upstream portion (65a) of the exhaust gas cleaning catalyst including an exhaust gas inlet side end of the exhaust gas cleaning catalyst is different from the Pt/Rh mass ratio in a downstream portion (65b) of the exhaust gas cleaning catalyst including an exhaust gas outlet side end of the exhaust gas cleaning catalyst, and the Pt/Rh mass ratio in the upstream portion (65a) is higher than the Pt/Rh mass ratio in the downstream portion (65b), the Pt/Rh mass ratio being a mass ratio of platinum (Pt) to rhodium (Rh) in the exhaust gas cleaning catalyst; and
the exhaust gas cleaning method comprises:
a high-temperature cleaning mode in which a treatment to convert NOx in exhaust gas is performed by alternately varying a concentration of hydrocarbon that flows into the exhaust gas cleaning catalyst between a high-concentration range in which the concentration of hydrocarbon is relatively high, and in which the air-fuel ratio is richer or slightly leaner than the stoichiometric air-fuel ratio, and a low-concentration range in which the concentration of hydrocarbon is relatively low, and in which the air-fuel ratio is by far leaner than the stoichiometric air-fuel ratio, in a predetermined cycle of 0.3 seconds to 5 seconds when a temperature of the exhaust gas cleaning catalyst is equal to or higher than a prescribed reference value; and
a low-temperature cleaning mode in which a treatment to convert NOx in exhaust gas is performed by maintaining the concentration of hydrocarbon that flows into the exhaust gas cleaning catalyst in the low-concentration range for a maintaining period of 60 seconds to 100 seconds and then temporarily shifting the concentration of hydrocarbon from the low-concentration range to the high-concentration range for a period equal to at most 10% of the maintaining period at intervals each of which is longer than the predetermined cycle when the temperature of the exhaust gas cleaning catalyst is lower than the prescribed reference value, and
wherein the reference value for the temperature of the exhaust gas cleaning catalyst is a value that is set in a range of 280°C to 500°C.

2. The exhaust gas cleaning method according to claim 1, wherein in the exhaust gas cleaning catalyst, the Pt/Rh mass ratio in the upstream portion (65a) is equal to or higher than 9.

3. The exhaust gas cleaning method according to claim 1 or 2, wherein in the exhaust gas cleaning catalyst, the Pt/Rh mass ratio in the downstream portion (65b) is lower than 9.

4. The exhaust gas cleaning method according to any one of claims 1 to 3, wherein in the exhaust gas cleaning catalyst, the upstream portion (65a) has a length equal to 25% to 60% of a length of the exhaust gas cleaning catalyst, and extends from the exhaust gas inlet side end toward an exhaust gas outlet of the exhaust gas cleaning catalyst.

5. An exhaust gas control apparatus which converts NOx in exhaust gas from an internal combustion engine using an exhaust gas cleaning catalyst, the exhaust gas control apparatus **characterized by** comprising:
the exhaust gas cleaning catalyst which is provided in an exhaust passage of the internal combustion engine to convert NOx in exhaust gas, the exhaust gas cleaning catalyst comprising:
a carrier;
a plurality of kinds of metal catalysts which are supported on the carrier; and
an NOx absorbent made of a metal oxide which contains at least one of an alkaline metal and an alkaline-earth metal which is supported on the carrier and has an NOx storage capacity,
wherein the exhaust gas cleaning catalyst includes at least platinum (Pt) and rhodium (Rh) as the metal catalysts, and
wherein a Pt/Rh mass ratio in an upstream portion (65a) of the exhaust gas cleaning catalyst including an exhaust gas inlet side end of the exhaust gas cleaning catalyst is different from the Pt/Rh mass ratio in a downstream portion (65b) of the exhaust gas cleaning catalyst including an exhaust gas outlet side end of the exhaust gas cleaning catalyst, and the Pt/Rh mass ratio in the upstream portion (65a) is higher than the Pt/Rh mass ratio in the downstream portion (65b), the Pt/Rh mass ratio being a mass ratio of platinum (Pt) to rhodium (Rh) in the exhaust gas cleaning catalyst;
the exhaust gas control apparatus further comprising
a temperature sensor (60a) which measures a temperature of the exhaust gas cleaning catalyst; and
a control portion (30) which is electrically connected to the temperature sensor (60a),
wherein the control portion (30) is configured to measure the temperature of the exhaust gas cleaning catalyst using the temperature sensor (60a), and to execute a high-temperature cleaning mode in which a treatment to convert NOx in exhaust gas is performed by alternately varying a concentration of hydrocarbon that flows into the exhaust gas cleaning catalyst between a high-concentration range in which the concentration of hydrocarbon is relatively high, and in which the air-fuel ratio is richer or slightly leaner than the stoichiometric air-fuel ratio, and a low-concentration range in which the concentration of hydrocarbon is relatively low, and in which the air-fuel ratio is by far leaner than the stoichiometric air-fuel ratio, in a predetermined cycle of 0.3 seconds to 5 seconds when the measured temperature of the exhaust gas cleaning catalyst is equal to or higher than a prescribed reference value, and
a low-temperature cleaning mode in which a treatment to convert NOx in exhaust gas is performed by maintaining the concentration of hydrocarbon that flows into the exhaust gas cleaning catalyst in the low-concentration range for a maintaining period of 60 seconds to 100 seconds and then temporarily shifting the concentration of hydrocarbon from the low-concentration range to the high-concentration range for a period equal to at most 10% of the maintaining period at intervals each of which is longer than the predetermined cycle when the measured temperature of the exhaust gas cleaning catalyst is lower than the prescribed reference value, and
wherein the reference value for the temperature of the exhaust gas cleaning catalyst is a value that is set in a range of 280°C to 500°C.

6. The exhaust gas control apparatus according to claim 5, wherein in the exhaust gas cleaning catalyst, the Pt/Rh mass ratio in the upstream portion (65a) is equal to or higher than 9.

7. The exhaust gas control apparatus according to claim 5 or 6, wherein in the exhaust gas cleaning catalyst, the Pt/Rh mass ratio in the downstream portion (65b) is lower than 9.

8. The exhaust gas control apparatus according to any one of claims 5 to 7, wherein in the exhaust gas cleaning catalyst, the upstream portion (65a) has a length equal to 25% to 60% of a length of the exhaust gas cleaning catalyst, and extends from the exhaust gas inlet side end toward an exhaust gas outlet of the exhaust gas cleaning catalyst.

9. The exhaust gas control apparatus according to any one of claims 5 to 8, further comprising
hydrocarbon supply means which is located upstream of the exhaust gas cleaning catalyst in the exhaust passage and supplies hydrocarbon, wherein the control portion (30) is configured to activate the hydrocarbon supply means to supply hydrocarbon into the exhaust passage at predetermined supply intervals in the high-temperature cleaning mode.

## Patentansprüche

1. Abgasreinigungsverfahren zum Umwandeln von NOx in einem Abgas aus einer Brennkraftmaschine unter Verwendung von einem Abgasreinigungskatalysator, der in einer Abgasleitung der Brennkraftmaschine angeordnet ist, **dadurch gekennzeichnet, dass**:
als der Abgasreinigungskatalysator ein Abgasreinigungskatalysator, der in einer Abgasleitung einer Brennkraftmaschine angeordnet ist, zum Umwandeln von NOx in einem Abgas verwendet wird, wobei der Abgasreinigungskatalysator aufweist:
einen Träger;
eine Mehrzahl von Arten von Metallkatalysatoren, die auf dem Träger geträgert werden; und
ein NOx-Absorbens, das aus einem Metalloxid gefertigt ist, das zumindest eines von einem Alkalimetall und einem Erdalkalimetall enthält, das auf dem Träger geträgert wird und eine NOx-Speicherkapazität aufweist;
wobei der Abgasreinigungskatalysator zumindest Platin (Pt) und Rhodium (Rh) als die Metallkatalysatoren beinhaltet, und
wobei ein Massenverhältnis von Pt/Rh in einem Bereich (65a) stromauf des Abgasreinigungskatalysators, der ein Ende an einer Abgaseinlassseite des Abgasreinigungskatalysators beinhaltet, sich von dem Massenverhältnis von Pt/Rh in einem stromabwärtigen Bereich (65b) des Abgasreinigungskatalysators unterscheidet, der ein Ende an einer Abgasauslassseite des Abgasreinigungskatalysators beinhaltet, und das Massenverhältnis von Pt/Rh in dem Bereich (65a) stromauf höher ist als das Massenverhältnis von Pt/Rh in dem stromabwärtigen Bereich (65b), wobei das Massenverhältnis von Pt/Rh ein Massenverhältnis von Platin (Pt) zu Rhodium (Rh) in dem Abgasreinigungskatalysator ist; und
das Abgasreinigungsverfahren aufweist:
einen Hochtemperatur-Reinigungsmodus, in dem eine Behandlung zum Umwandeln von NOx in einem Abgas ausgeführt wird durch alternierendes Variieren einer Konzentration von Kohlenwasserstoff, der in den Abgasreinigungskatalysator strömt, zwischen einem Hochkonzentrationsbereich, in dem die Konzentration von Kohlenwasserstoff relativ hoch ist, und in dem das Kraftstoff-Luftverhältnis reicher oder geringfügig magerer ist als das stöchiometrische Kraftstoff-Luftverhältnis, und einem Niedrigkonzentrationsbereich, in dem die Konzentration von Kohlenwasserstoff relativ niedrig ist, und in dem das Kraftstoff-Luftverhältnis bei Weitem magerer ist als das stöchiometrische Kraftstoff-Luftverhältnis, in einem vorbestimmten Zyklus von 0,3 Sekunden bis zu 5 Sekunden, wenn eine Temperatur des Abgasreinigungskatalysators höher oder gleich einem vorgeschriebenen Referenzwert ist; und
einen Niedrigtemperatur-Reinigungsmodus, in dem eine Behandlung zum Umwandeln von NOx in einem Abgas ausgeführt wird durch Beibehalten der Konzentration von Kohlenwasserstoff, der in den Abgasreinigungskatalysator in dem Niedrigkonzentrationsbereich strömt, für eine Beibehaltungszeitspanne von 60 Sekunden bis 100 Sekunden, und dann durch vorübergehendes Wechseln der Konzentration von Kohlenwasserstoff von dem Niedrigkonzentrationsbereich in den Hochkonzentrationsbereich für eine Zeitspanne, die höchstens 10% der Beibehaltungszeitspanne entspricht, in Intervallen, die jeweils länger sind als der vorbestimmte Zyklus, wenn die Temperatur des Abgasreinigungskatalysators niedriger ist als der vorbestimmte Referenzwert, und
wobei der Referenzwert für die Temperatur des Abgasreinigungskatalysators ein Wert ist, der in einem Bereich von 280 °C bis 500 °C eingestellt ist.

2. Abgasreinigungsverfahren nach Anspruch 1, wobei in dem Abgasreinigungsverfahren das Massenverhältnis von Pt/Rh in dem Bereich (65a) stromauf höher als oder gleich 9 ist.

3. Abgasreinigungsverfahren nach Anspruch 1 oder 2, wobei in dem Abgasreinigungskatalysator das Massenverhältnis von Pt/Rh in dem stromabwärtigen Bereich (65b) niedriger als 9 ist.

4. Abgasreinigungsverfahren nach einem der Ansprüche 1 bis 3, wobei in dem Abgasreinigungskatalysator der Bereich(65a) stromauf eine Länge aufweist, die gleich 25 % bis 60 % einer Länge des Abgasreinigungskatalysators ist, und sich von dem Ende der Abgaseinlassseite zu einem Abgasauslass des Abgasreinigungskatalysators erstreckt.

5. Abgassteuerungsvorrichtung, die NOx in einem Abgas von einer Brennkraftmaschine unter Verwendung eines Abgasreinigungskatalysators umwandelt, wobei die Abgassteuerungsvorrichtung **dadurch gekennzeichnet ist, dass** sie aufweist:
den Abgasreinigungskatalysator, der in einer Abgasleitung der Brennkraftmaschine angeordnet ist, zum Umwandeln von NOx in einem Abgas, wobei der Abgasreinigungskatalysator aufweist:
einen Träger;
eine Mehrzahl von Arten von Metallkatalysatoren, die auf dem Träger geträgert werden; und
ein NOx-Absorbens, das aus einem Metalloxid gefertigt ist, das zumindest eines von einem Alkalimetall und einem Erdalkalimetall enthält, das auf dem Träger geträgert wird und eine NOx-Speicherkapazität aufweist;
wobei der Abgasreinigungskatalysator zumindest Platin (Pt) und Rhodium (Rh) als die Metallkatalysatoren beinhaltet, und
wobei ein Massenverhältnis von Pt/Rh in einem Bereich (65a) stromauf des Abgasreinigungskatalysators, der ein Ende an einer Abgaseinlassseite des Abgasreinigungskatalysators beinhaltet, sich von dem Massenverhältnis von Pt/Rh in einem stromabwärtigen Bereich (65b) des Abgasreinigungskatalysators unterscheidet, der ein Ende einer Abgasauslassseite des Abgasreinigungskatalysators beinhaltet, und das Massenverhältnis von Pt/Rh in dem Bereich (65a) stromauf höher ist als das Massenverhältnis von Pt/Rh in dem stromabwärtigen Bereich (65b), wobei das Massenverhältnis von Pt/Rh ein Massenverhältnis von Platin (Pt) zu Rhodium (Rh) in dem Abgasreinigungskatalysator ist; und
wobei die Abgassteuerungsvorrichtung ferner aufweist.
einen Temperatursensor (60a), der eine Temperatur des Abgasreinigungskatalysators misst, und
einen Steuerbereich (30), der mit dem Temperatursensor (60a) elektrisch verbunden ist,
wobei der Steuerbereich (30) konfiguriert ist zum Messen der Temperatur des Abgasreinigungskatalysators unter Verwendung des Temperatursensors (60a), und zum Ausführen eines Hochtemperatur-Reinigungsmodus, in dem eine Behandlung zum Umwandeln von NOx in einem Abgas ausgeführt wird durch alternierendes Variieren einer Konzentration von Kohlenwasserstoff, der in den Abgasreinigungskatalysator strömt, zwischen einem Hochkonzentrationsbereich, in dem die Konzentration von Kohlenwasserstoff relativ hoch ist, und in dem das Kraftstoff-Luftverhältnis reicher oder geringfügig magerer ist als das stöchiometrische Kraftstoff-Luftverhältnis, und einem Niedrigkonzentrationsbereich, in dem die Konzentration von Kohlenwasserstoff relativ niedrig ist, und in dem das Kraftstoff-Luftverhältnis bei Weitem magerer ist als das stöchiometrische Kraftstoff-Luftverhältnis, in einem vorbestimmten Zyklus von 0,3 Sekunden bis zu 5 Sekunden, wenn die gemessene Temperatur des Abgasreinigungskatalysators höher oder gleich einem vorgeschriebenen Referenzwert ist; und
eines Niedrigtemperatur-Reinigungsmodus, in dem eine Behandlung zum Umwandeln von NOx in einem Abgas ausgeführt wird durch Beibehalten der Konzentration von Kohlenwasserstoff, der in den Abgasreinigungskatalysator strömt, in dem Niedrigkonzentrationsbereich für eine Beibehaltungszeitspanne von 60 Sekunden bis 100 Sekunden, und dann durch vorübergehendes Wechseln der Konzentration von Kohlenwasserstoff von dem Niedrigkonzentrationsbereich in den Hochkonzentrationsbereich für eine Zeitspanne, die höchstens 10 % der Beibehaltungszeitspanne entspricht, in Intervallen, die jeweils länger sind als der vorbestimmte Zyklus, wenn die gemessene Temperatur des Abgasreinigungskatalysators niedriger ist als der vorgeschriebene Referenzwert, und
wobei der Referenzwert für die Temperatur des Abgasreinigungskatalysators ein Wert ist, der in einem Bereich von 280 °C bis 500 °C eingestellt ist.

6. Abgassteuerungsvorrichtung nach Anspruch 5, wobei in dem Abgasreinigungskatalysator das Massenverhältnis von Pt/Rh in dem Bereich (65a) stromauf höher als oder gleich 9 ist.

7. Abgassteuerungsvorrichtung nach Anspruch 5 oder 6, wobei in dem Abgasreinigungskatalysator das Massenverhältnis von Pt/Rh in dem stromabwärtigen Bereich (65b) niedriger als 9 ist.

8. Abgassteuerungsvorrichtung nach einem der Ansprüche 5 bis 7, wobei in dem Abgasreinigungskatalysator der Bereich (65a) stromauf eine Länge aufweist, die gleich 25 % bis 60 % von einer Länge des Abgasreinigungskatalysators entspricht, und sich von dem Ende der Abgaseinlassseite zu einem Abgasauslass des Abgasreinigungskatalysators erstreckt.

9. Abgassteuerungsvorrichtung nach einem der Ansprüche 5 bis 8, ferner aufweisend:
eine Kohlenwasserstoff-Zuführeinrichtung, die stromauf von dem Abgasreinigungskatalysator in der Abgasleitung angeordnet ist und Kohlenwasserstoff zuführt, wobei der Steuerungsbereich (30) konfiguriert ist zum Aktivieren der Kohlenwasserstoff-Zuführeinrichtung zum Zuführen von Kohlenwasserstoff in die Abgasleitung in vorbestimmten Zuführintervallen in dem Hochtemperaturreinigungsmodus.

## Revendications

1. Procédé de nettoyage de gaz d'échappement pour convertir NOx dans des gaz d'échappement provenant d'un moteur à combustion interne en utilisant un catalyseur de nettoyage de gaz d'échappement qui est fourni dans un passage d'échappement du moteur à combustion interne, **caractérisé en ce que** :
il est utilisé comme le catalyseur de nettoyage de gaz d'échappement un catalyseur de nettoyage de gaz d'échappement qui est fourni dans un passage d'échappement d'un moteur à combustion interne pour convertir NOx dans des gaz d'échappement, le catalyseur de nettoyage de gaz d'échappement comprenant :
un support ;
plusieurs types de catalyseurs de métaux qui sont supportés sur le support ; et
un absorbant de NOx, constitué d'un oxyde de métal qui contient au moins un d'un métal alcalin et d'un métal alcalino-terreux, qui est supporté sur le support et présente une capacité de stockage de NOx,
dans lequel le catalyseur de nettoyage de gaz d'échappement comprend au moins du platine (Pt) et du rhodium (Rh) comme les catalyseurs de métaux, et
dans lequel un rapport massique Pt/Rh dans une portion amont (65a) du catalyseur de nettoyage de gaz d'échappement incluant une extrémité de côté d'entrée de gaz d'échappement du catalyseur de nettoyage de gaz d'échappement est différent du rapport massique Pt/Rh dans une portion avale (65b) du catalyseur de nettoyage de gaz d'échappement incluant une extrémité de côté de sortie de gaz d'échappement du catalyseur de nettoyage de gaz d'échappement, et le rapport massique Pt/Rh dans la portion amont (65a) est supérieur au rapport massique Pt/Rh dans la portion avale (65b), le rapport massique Pt/Rh étant un rapport massique de platine (Pt) à rhodium (Rh) dans le catalyseur de nettoyage de gaz d'échappement ; et
le procédé de nettoyage de gaz d'échappement comprend :
un mode de nettoyage haute température dans lequel un traitement pour convertir NOx dans des gaz d'échappement est réalisé en faisant varier de manière alternée une concentration en hydrocarbure qui s'écoule dans le catalyseur de nettoyage de gaz d'échappement entre un intervalle de haute concentration dans lequel la concentration en hydrocarbure est relativement haute, et dans lequel le rapport air-carburant est plus riche ou légèrement plus pauvre que le rapport air-carburant stoechiométrique, et un intervalle de basse concentration dans lequel la concentration en hydrocarbure est relativement basse, et dans lequel le rapport air-carburant est de loin plus pauvre que le rapport air-carburant stoechiométrique, dans un cycle prédéterminé de 0,3 seconde à 5 secondes lorsqu'une température du catalyseur de nettoyage de gaz d'échappement est supérieure ou égale à une valeur de référence prescrite ; et
un mode de nettoyage basse température dans lequel un traitement pour convertir NOx dans des gaz d'échappement est réalisé en maintenant la concentration en hydrocarbure qui s'écoule dans le catalyseur de nettoyage de gaz d'échappement dans l'intervalle de basse concentration pendant une période de maintien de 60 secondes à 100 secondes et en décalant ensuite temporairement la concentration en hydrocarbure de l'intervalle de basse concentration à l'intervalle de haute concentration sur une période au plus égale à 10 % de la période de maintien à des intervalles qui sont chacun plus longs que le cycle prédéterminé lorsque la température du catalyseur de nettoyage de gaz d'échappement est inférieure à la valeur de référence prescrite, et
dans lequel la valeur de référence pour la température du catalyseur de nettoyage de gaz d'échappement est une valeur qui est fixée dans un intervalle de 280°C à 500°C.

2. Procédé de nettoyage de gaz d'échappement selon la revendication 1, dans lequel dans le catalyseur de nettoyage de gaz d'échappement, le rapport massique Pt/Rh dans la portion amont (65a) est supérieur ou égal à 9.

3. Procédé de nettoyage de gaz d'échappement selon la revendication 1 ou 2, dans lequel dans le catalyseur de nettoyage de gaz d'échappement, le rapport massique Pt/Rh dans la portion avale (65b) est inférieur à 9.

4. Procédé de nettoyage de gaz d'échappement selon l'une quelconque des revendications 1 à 3, dans lequel dans le catalyseur de nettoyage de gaz d'échappement, la portion amont (65a) présente une longueur égale à de 25 % à 60 % d'une longueur du catalyseur de nettoyage de gaz d'échappement, et s'étend de l'extrémité de côté d'entrée des gaz d'échappement vers une sortie des gaz d'échappement du catalyseur de nettoyage de gaz d'échappement.

5. Appareil de contrôle de gaz d'échappement qui convertit NOx dans des gaz d'échappement provenant d'un moteur à combustion interne en utilisant un catalyseur de nettoyage de gaz d'échappement, l'appareil de contrôle de gaz d'échappement étant **caractérisé en ce qu'**il comprend :
le catalyseur de nettoyage de gaz d'échappement qui est fourni dans un passage d'échappement du moteur à combustion interne pour convertir NOx dans des gaz d'échappement, le catalyseur de nettoyage de gaz d'échappement comprenant :
un support ;
plusieurs types de catalyseur de métaux qui sont supportés sur le support ; et
un absorbant de NOx, constitué d'un oxyde de métal qui contient au moins un d'un métal alcalin et d'un métal alcalino-terreux qui est supporté sur le support et présente une capacité de stockage de NOx,
dans lequel le catalyseur de nettoyage de gaz d'échappement comprend au moins du platine (Pt) et du rhodium (Rh) comme les catalyseurs de métaux, et
dans lequel un rapport massique Pt/Rh dans une portion amont (65a) du catalyseur de nettoyage de gaz d'échappement incluant une extrémité de côté d'entrée de gaz d'échappement du catalyseur de nettoyage de gaz d'échappement est différent du rapport massique Pt/Rh dans une portion avale (65b) du catalyseur de nettoyage de gaz d'échappement incluant une extrémité de côté de sortie de gaz d'échappement du catalyseur de nettoyage de gaz d'échappement, et le rapport massique Pt/Rh dans la portion amont (65a) est supérieur au rapport massique Pt/Rh dans la portion avale (65b), le rapport massique Pt/Rh étant un rapport massique de platine (Pt) à rhodium (Rh) dans le catalyseur de nettoyage de gaz d'échappement ;
l'appareil de contrôle de gaz d'échappement comprenant de plus
un détecteur de température (60a) qui mesure une température du catalyseur de nettoyage de gaz d'échappement ; et
une portion de contrôle (30) qui est électriquement connectée au détecteur de température (60a),
dans lequel la portion de contrôle (30) est configurée pour mesurer la température du catalyseur de nettoyage de gaz d'échappement en utilisant le détecteur de température (60a), et pour exécuter un mode de nettoyage haute température dans lequel un traitement pour convertir NOx dans des gaz d'échappement est réalisé en faisant varier de manière alternée une concentration en hydrocarbure qui s'écoule dans le catalyseur de nettoyage de gaz d'échappement entre un intervalle de haute concentration dans lequel la concentration en hydrocarbure est relativement haute, et dans lequel le rapport air-carburant est plus riche ou légèrement plus pauvre que le rapport air-carburant stoechiométrique, et un intervalle de basse concentration dans lequel la concentration en hydrocarbure est relativement basse, et dans lequel le rapport air-carburant est de loin plus pauvre que le rapport air-carburant stoechiométrique, dans un cycle prédéterminé de 0,3 seconde à 5 secondes lorsque la température du catalyseur de nettoyage de gaz d'échappement est supérieure ou égale à une valeur de référence prescrite ; et
un mode de nettoyage basse température dans lequel un traitement pour convertir NOx dans des gaz d'échappement est réalisé en maintenant la concentration en hydrocarbure qui s'écoule dans le catalyseur de nettoyage de gaz d'échappement dans l'intervalle de basse concentration pendant une période de maintien de 60 secondes à 100 secondes et en décalant ensuite temporairement la concentration en hydrocarbure de l'intervalle de basse concentration à l'intervalle de haute concentration sur une période au plus égale à 10 % de la période de maintien à des intervalles qui sont chacun plus longs que le cycle prédéterminé lorsque la température mesurée du catalyseur de nettoyage de gaz d'échappement est inférieure à la valeur de référence prescrite, et
dans lequel la valeur de référence pour la température du catalyseur de nettoyage de gaz d'échappement est une valeur qui est fixée dans un intervalle de 280°C à 500°C.

6. Appareil de contrôle de gaz d'échappement selon la revendication 5, dans lequel dans le catalyseur de nettoyage de gaz d'échappement, le rapport massique Pt/Rh dans la portion amont (65a) est supérieur ou égal à 9.

7. Appareil de contrôle de gaz d'échappement selon la revendication 5 ou 6, dans lequel dans le catalyseur de nettoyage de gaz d'échappement, le rapport massique Pt/Rh dans la portion avale (65b) est inférieur à 9.

8. Appareil de contrôle de gaz d'échappement selon l'une quelconque des revendications 5 à 7, dans lequel dans le catalyseur de nettoyage de gaz d'échappement, la portion amont (65a) présente une longueur égale à de 25 % à 60 % d'une longueur du catalyseur de nettoyage de gaz d'échappement, et s'étend de l'extrémité de côté d'entrée des gaz d'échappement vers une sortie des gaz d'échappement du catalyseur de nettoyage de gaz d'échappement.

9. Appareil de contrôle de gaz d'échappement selon l'une quelconque des revendications 5 à 8, comprenant de plus
un moyen d'alimentation en hydrocarbure qui est disposé en amont du catalyseur de nettoyage de gaz d'échappement dans le passage d'échappement et introduit un hydrocarbure, dans lequel la portion de contrôle (30) est configurée pour activer le moyen d'alimentation en hydrocarbure pour introduire un hydrocarbure dans le passage d'échappement à des intervalles d'alimentation prédéterminés dans le mode de nettoyage haute température.
